# EUROPÄISCHE PATENTSCHRIFT

(11) **EP 1 597 935 B1**
(45) Veröffentlichungstag und Bekanntmachung des Hinweises auf die Patenterteilung: **18.04.2007**
(21) Anmeldenummer: 04804982.9
(22) Anmeldetag: 22.12.2004
(51) Int. Cl.: H04Q 7/38

(54) **VERFAHREN ZUM VERWALTEN VON KOMMUNIKATIONSSITZUNGEN**
METHOD FOR MANAGING COMMUNICATION SESSIONS
PROCEDE POUR GERER DES SESSIONS DE COMMUNICATION

(30) Priorität: 05.02.2004 DE 102004005720; 20.02.2004 DE 102004008392
(43) Veröffentlichungstag der Anmeldung: 23.11.2005
(73) Patentinhaber: SIEMENS AKTIENGESELLSCHAFT, 80333 München (DE)
(72) Erfinder: GOTTSCHALK, Thomas, 12524 Berlin (DE); HILF, Eric, 13629 Berlin (DE); KAUTZ, Olaf, 10179 Berlin (DE)
(86) Internationale Anmeldenummer: PCT/EP2004/053648
(87) Internationale Veröffentlichungsnummer: WO 2005/076650

(56) Entgegenhaltungen:
- WO-A-03/017522
- US-B1- 6 434 402
- US-B1- 6 608 820
- US-B1- 6 650 908

## Beschreibung

Die vorliegende Erfindung betrifft ein Verfahren zum Verwalten von Kommunikationssitzungen, insbesondere Kommunikationssitzungen im Rahmen eines sogenannten "Push-to-Talk"-Dienstes, bei dem ein Sender eine Sprachnachricht an mehrere Empfänger gleichzeitig nach dem Halbduplex-Verfahren versenden kann. Das bedeutet, während der Sender Sprachnachrichten übermittelt, können ihn die Empfänger nicht unterbrechen.

Bei einem Dienst zur Sprachdatenübertragung zwischen Mobilfunkgeräten in einem Kommunikationsnetz, dem sogenannten "Push-to-Talk"-Dienst (PTT-Dienst) kann ein Benutzer nach Drücken einer speziellen dafür eingerichteten Taste an seinem Mobilfunkgerät einem Empfänger (oder auch mehreren Empfängern gleichzeitig) nahezu in Echtzeit ("Real Time") eine Sprachnachricht übermitteln. Der (oder die mehreren) Empfänger haben die Möglichkeit, auf gleiche Weise eine Antwort zu senden, so dass dieser PTT-Dienst mit dem bekannten "Walkie-Talkie"-Dienst vergleichbar ist. Nachteilig bei einem herkömmlichen PTT-Dienst ist, dass ein Benutzer mit seinem Mobilfunkgerät immer nur an einer Kommunikationssitzung einer Kommunikationsgruppe beteiligt sein kann. Möchte er an einer weiteren Kommunikationssitzung ("Session") beteiligt sein, muss er die gerade aktive Sitzung beenden und eine Verbindung zu einer anderen gewünschten Kommunikationssitzung einer anderen Kommunikationsgruppe aufbauen. Das bedeutet, es ist nicht möglich, gleichzeitig an mehreren PTT-Sitzungen teilzunehmen. Gerade für Führungskräfte wäre jedoch die gleichzeitige oder parallele Anwesenheit in mehreren Kommunikationssitzungen bzw. mehreren Kommunikationsgruppen hilfreich.

Die Veröffentlichung US-B-6650908 beschreibt ein Verfahren, bei dem der Benutzer zwar eine erste, dedizierte Sprachverbindung halten kann, um an einer Gruppen sitzung teilzunehmen, jedoch können nicht mehrere Gruppennsilzungen verwaltet werden.

Somit ist es die Aufgabe der vorliegenden Erfindung, eine Möglichkeit zu schaffen, die die parallele Teilnahme an mehreren Kommunikationssitzungen erlaubt.

Diese Aufgabe wird durch die unabhängigen Ansprüche gelöst. Vorteilhafte Ausgestaltungen sind Gegenstand der Unteransprüche.

Dabei umfasst ein Verfahren zum Verwalten von Kommunikationssitzungen in einem paketorientierten Kommunikationssystem, bestehend aus einer zentralen Steuereinrichtung und einer Mehrzahl von Mobilstationen, welche über die zentrale Steuereinrichtung miteinander verbindbar sind bzw. eine Kommunikationsverbindung über die zentrale Steuereinrichtung aufbauen können, folgende Schritte. Zunächst wird eine Kommunikationssitzung zwischen Mobilstationen, welche einer ersten Kommunikationsgruppe angehören, über die zentrale Steuereinrichtung aufgebaut. Anschließend legt eine erste Mobilstation der ersten Kommunikationsgruppe, welche ferner zumindest einer zweiten Kommunikationsgruppe angehört, eine Sitzungspriorisierung fest. Dabei kann die Sitzungspriorisierung angeben, an welcher Kommunikationssitzung mit einer angehörigen Kommunikationsgruppe die erste Mobilstation in einem aktiven Teilnahmezustand, und an welcher Kommunikationssitzung der übrigen der angehörigen Kommunikationsgruppen die erste Mobilstation in einem passiven Teilnahmezustand teilnehmen möchte. Das bedeutet, es wird hier vorausgesetzt, dass die erste Mobilstation mehreren Kommunikationsgruppen angehört bzw. als teilnehmende Mobilstation eingetragen ist. Diese Sitzungspriorisierung wird dann an die zentrale Steuereinrichtung übertragen, da diese die einzelnen Kommunikationssitzungen verwaltet und somit die gesamte Datenkommunikation von einer Mobilstation über die zentrale Steuereinrichtung an die übrigen Mobilstationen einer Kommunikationsgruppe geleitet wird. Es wird nun eine zweite Kommunikationssitzung zwischen Mobilstationen einschließlich der ersten Mobilstation, welche der zumindest einen zweiten Kommunikationsgruppe angehören, über die zentrale Steuereinrichtung aufgebaut. Dabei kann das Aufbauen der zweiten Kommunikationssitzung von der ersten Mobilstation oder einer beliebigen der anderen Mobilstationen der zweiten Kommunikationsgruppe initiiert werden. Schließlich wird die erste Mobilstation bzw. die Datenkommunikation mit der ersten Mobilstation durch die zentrale Steuereinrichtung in den beiden Kommunikationssitzungen entsprechend der von der ersten Mobilstation übertragenen Sitzungspriorisierung verwaltet. Das bedeutet, entsprechend der Festlegung, in welcher Kommunikationssitzung die erste Mobilstation aktiv teilnehmen möchte, erhält sie bestimmte Rechte zur Datenübertragung, oder es wird eine bestimmte Art von Daten bzw. ein bestimmtes Format von Daten zum Empfang durch die erste Mobilstation festgelegt, während für die erste Mobilstation in einem passiven Teilnahmezustand andere Rechte zur Datenübertragung bzw. andere Datenformate beim Empfang von Daten bzw. Datenpaketen festgelegt werden. Vorteil des Verfahrens ist jedoch, dass eine Mobilstation nun in mindestens zwei parallel stattfindenden Kommunikationssitzungen teilnehmen kann, wobei beispielsweise der Benutzer der oben genannten ersten Mobilstation festlegen kann (durch die Sitzungspriorisierung), an welcher Kommunikationssitzung er aktiv und an welcher Kommunikationssitzung er passiv teilnehmen möchte.

Gemäß einer vorteilhaften Ausgestaltung des Verfahrens werden in dem aktiven Teilnahmezustand der ersten Mobilstation in einer Kommunikationssitzung Datenpakete mit (akustischen) Sprachinformationen zu oder von der ersten Mobilstation übertragen. Das bedeutet, im aktiven Teilnahmezustand hat die erste Mobilstation das Recht, sowohl Daten an die anderen Teilnehmer bzw. Mobilstationen zu versenden, als auch das Recht, Daten bzw. Datenpakte zu empfangen. Weiteres Kennzeichen des aktiven Teilnahmezustands kann sein, dass Datenpakete mit Sprachinformationen von und zu der ersten Mobilstation übertragen werden. Empfängt die erste Mobilstation Daten bzw. Datenpakete mit Sprachinformationen, so können diese direkt von einer akustischen Ausgabeeinheit, wie einem Lautsprecher, der ersten Mobilstation für den Benutzer ausgegeben werde. In dem Fall, in dem die erste Mobilstation das Recht zum Versenden von Daten an andere Teilnehmer der Kommunikationssitzung bzw. Kommunikationsgruppe hat, können Sprachinformationen auch von einer akustischen Eingabeeinrichtung der ersten Mobilstation, wie einem Mikrofon, erfasst werden und nach entsprechender Verarbeitung in der ersten Mobilstation als Datenpakete zur zentralen Steuereinrichtung übertragen werden, welche die Datenpakete an die übrigen Teilnehmer der Kommunikationssitzung weiterleitet.

Gemäß einer weiteren vorteilhaften Ausgestaltung werden in dem passiven Teilnahmezustand der ersten Mobilstation in einer Kommunikationssitzung keine Datenpakete mit Sprachinformationen, sondern Datenpakete mit Textinformationen zu der ersten Mobilstation übertragen. Ferner kann der passive Teilnahmezustand derart charakterisiert sein, dass die erste Mobilstation kein Recht mehr erhält, Daten an die anderen Teilnehmer der "passiven" Kommunikationssitzung zu senden. Das bedeutet, die erste Mobilstation "hört in der Kommunikationssitzung nur zu". Die Textinformationen in den empfangenen Datenpaketen werden dann vorteilhafter Weise auf einer Anzeigeeinrichtung bzw. auf einem Display der ersten Mobilstation für deren Benutzer ausgegeben. Somit ist es gemäß einer vorteilhaften Ausgestaltung möglich, dass die erste Mobilstation gleichzeitig an zumindest zwei Kommunikationssitzungen teilnimmt, wobei die in den "passiven" Kommunikationssitzungen empfangenen Textinformationen auf der Anzeigeeinrichtung ausgegeben werden, während gleichzeitig in der "aktiven" Kommunikationssitzung empfangenen Sprachinformationen akustisch durch einen Lautsprecher der Mobilstation ausgegeben werden. Entsprechend können natürlich, wenn die erste Mobilstation gerade das Recht zur Versendung von Daten hat, gleichzeitig Sprachinformationen durch ein Mikrofon erfasst werden und diese Sprachinformationen nach entsprechender Verarbeitung an die Teilnehmer der aktiven Kommunikationssitzung weitergeleitet werden, während Textinformationen der passiven Kommunikationssitzung bzw. Kommunikationsgruppe empfangen und auf der Anzeigeeinrichtung dargestellt werden.

Wie bereits oben erwähnt, können in Kommunikationssitzungen Datenpakete mit Sprachinformationen ausgetauscht werden. Das bedeutet, spricht ein Benutzer bzw. Teilnehmer, so wird dessen Sprache von seiner Mobilstation erfasst und nach entsprechender Verarbeitung bzw. Digitalisierung in Form von Datenpaketen mit Sprachinformationen an die anderen Sitzungsteilnehmer über die zentrale Steuereinrichtung geleitet. Das Senden bzw. Empfangen von Datenpaketen mit Sprachinformationen kann dann als aktiver Teilnahmezustand in einer Kommunikationssitzung bezeichnet werden. Wie ferner bereits oben erwähnt worden ist, kann die erste Mobilstation (oder auch andere Mobilstationen) auch passiv an einer Kommunikationssitzung teilnehmen, wobei hier lediglich Daten bzw. Datenpakete mit Textinformationen zur jeweiligen "passiven" Mobilstation übertragen werden. Gemäß einer vorteilhaften Ausgestaltung ist es hierbei möglich, dass die normalerweise in einer aktiven Kommunikationssitzung ausgetauschten Datenpakete mit Sprachinformationen für die passiven Teilnehmer zu Datenpaketen mit Textinformationen umgewandelt werden und schließlich den passiven Teilnehmern zugestellt werden. Es sei wiederum auf das Beispiel der ersten Mobilstation Bezug genommen, welche somit von der aktiven Kommunikationssitzung bzw. Kommunikationsgruppe durch die zentrale Steuereinrichtung Datenpakete mit Sprachinformationen zugestellt bekommt, während sie von der passiven Kommunikationssitzung bzw. Kommunikationsgruppe Datenpakete mit Textinformationen zugestellt bekommt. Vorteilhafter Weise werden die jeweiligen an die an mehreren Kommunikationssitzungen beteiligten Mobilstationen zugestellten Datenpakete beispielsweise in einem Kopffeld der Datenpakete gekennzeichnet, nämlich dahingehend, ob sie von einer "aktiven" oder "passiven" Kommunikationssitzung oder Kommunikationsgruppe stammen. Entsprechend kann dann die Kennzeichnung der Datenpakete von der jeweiligen "multiaktiven" bzw. mehrfachteilnehmenden Mobilstation, wie hier im Beispiel der ersten Mobilstation, analysiert werden und es können die Sprachinformationen oder Textinformationen nach entsprechender Verarbeitung entweder durch einen Lautsprecher oder eine Anzeigeeinrichtung ausgegeben werden.

Die Kommunikationssitzungen können dabei vorteilhafter Weise als "Push-to-Talk"-Sitzungen (PTT-Sitzungen) realisiert sein, bei denen eine Mobilstation als Sender eine Sprachnachricht an mehrere empfangende Mobilstationen gleichzeitig nach dem Halbduplex-Verfahren über die zentrale Steuereinrichtung versendet. Das bedeutet, es hat immer nur ein bzw. der Sender zu einer bestimmten Zeit das Recht, Nachrichten bzw. Sprachnachrichten an die übrigen Sitzungsteilnehmer zu versenden, wobei die übrigen Sitzungsteilnehmer ihn dabei nicht unterbrechen können. Erst nachdem der Sender damit aufgehört hat, Nachrichten bzw. Sprachnachrichten zu versenden, kann die zentrale Steuereinrichtung einem anderen Sitzungsteilnehmer das Recht zuweisen, selbst als Sender aufzutreten, und Sprachnachrichten gemäß dem Halbduplex-Verfahren an die übrigen Sitzungsteilnehmer zu versenden.

Die Übertragung von Sprachdaten bzw. Sprachnachrichten in einer Kommunikationssitzung kann ferner derart ausgestaltet sein, dass ein Sender Sprachnachrichten bzw. Datenpakete mit Sprachinformationen an die zentrale Steuereinrichtung versendet, wobei diese zunächst die übrigen Kommunikationssitzungsteilnehmer darüber informiert, dass Datenpakete von einem Sender zur Übertragung bereitstehen. Möchte einer der übrigen Kommunikationssitzungsteilnehmer bzw. eine Mobilstation der Kommunikationssitzung die bereitstehenden Datenpakete empfangen, so kann er dies der zentralen Steuereinrichtung mitteilen, woraufhin diese die Datenpakete an diese einverstandene Mobilstation überträgt.

Damit die jeweiligen übrigen Teilnehmer der Kommunikationssitzungen abschätzen können, ob von der ersten Mobilstation bzw. deren Benutzer überhaupt eine Reaktion zu erwarten ist bzw. wie schnell eine Reaktion zu erwarten ist, ist es vorteilhaft, wenn diesen übrigen Teilnehmern bzw. Mobilstationen der jeweilige Teilnahmezustand der ersten Mobilstation an den Kommunikationssitzungen mitgeteilt wird. Hat die erste Mobilstation beispielsweise ihre Sitzungspriorisierung derart festgelegt, dass sie an der ersten Kommunikationssitzung aktiv teilnehmen möchte, so wird den übrigen Teilnehmern bzw. Mobilstationen der ersten Kommunikationssitzung vorteilhafter Weise mitgeteilt, dass die Mobilstation hier aktiv teilnimmt, so dass diese mit einer Reaktion bzw. schnellen Reaktion auf bestimmte Fragen oder Sachverhalte in der Kommunikationssitzung rechnen können. Ferner kann auch den übrigen Teilnehmern der zumindest einen zweiten Kommunikationssitzung oder Kommunikationsgruppe mitgeteilt werden, dass hier die erste Mobilstation nur passiv teilnimmt. Dann können sich diese Teilnehmer der zumindest einen zweiten Kommunikationssitzung darauf einstellen, dass keine unmittelbare Reaktion der ersten Mobilstation bzw. deren Benutzer zu erwarten ist.

Zur weiteren Verbesserung der Information der Teilnehmer in den jeweiligen Kommunikationssitzungen bzw. zur Verbesserung der Benutzerfreundlichkeit ist es vorteilhaft, den jeweiligen Teilnehmern der Kommunikationssitzungen mitzuteilen, an welchen weiteren Kommunikationssitzungen die erste Mobilstation (aber auch andere eventuell mehrfachteilnehmende Mobilstationen) momentan teilnimmt. Das bedeutet, die zentrale Steuereinrichtung, welche die jeweiligen Kommunikationssitzungen verwaltet, kann ferner an jede Mobilstation einer Kommunikationssitzungen bzw. Kommunikationsgruppe eine Statusinformation der ersten Mobilstation oder auch aller übrigen Sitzungsteilnehmer der gleichen Kommunikationssitzung mitteilen, in der angegeben ist, an welchen weiteren Kommunikationssitzungen die jeweiligen anderen Kommunikationsteilnehmer ferner beteiligt sind (vorteilhafter Weise mit der Zusatzinformation, ob aktiv oder passiv).

Gemäß einem weiteren Aspekt der Erfindung soll ein Problem behandelt werden, das bei Verfahren zum Durchführen bzw. Verwalten von mehreren parallelen Kommunikationssitzungen, insbesondere oben dargestellter Art, auftritt. Bei derartigen Verfahren zum Verwalten von Kommunikationssitzungen in einem paketorientierten Kommunikationssystem bestehend aus einer zentralen Steuereinrichtung und einer Mehrzahl von Mobilstationen, welche über die zentrale Steuereinrichtung miteinander verbindbar sind, besteht eine erste Kommunikationssitzung zwischen Mobilstationen, welche einer ersten Kommunikationsgruppe zugeordnet sind, über die zentrale Steuereinrichtung. Ferner besteht eine zweite Kommunikationssitzung zwischen Mobilstationen einschließlich der ersten Mobilstation, welche der zumindest einen zweiten Kommunikationsgruppe zugeordnet sind, über die zentrale Steuereinrichtung. Der Benutzer der ersten Mobilstation hat eine Sitzungspriorisierung für seine erste Mobilstation festgelegt und diese an die zentrale Steuereinrichtung übertragen. Folglich wird die erste Mobilstation durch die zentrale Steuereinrichtung in den beiden Kommunikationssitzungen entsprechend der übertragenen Sitzungspriorisierung verwaltet. Vorteilhafterweise gibt die Sitzungspriorisierung an, an welcher Kommunikationssitzung mit einer der zugeordneten Kommunikationsgruppen die erste Mobilstation in einem aktiven Teilnahmezustand und an welcher Kommunikationssitzung der übrigen der zugeordneten Kommunikationsgruppen die erste Mobilstation in einem passiven Teilnahmezustand teilnehmen möchte. Das kann bedeuten, dass in dem aktiven Teilnahmezustand einer Kommunikationssitzung Datenpakete mit Sprachinformationen zu oder von der ersten Mobilstation übertragen werden, die von der jeweiligen Mobilstation akustisch ausgegeben und/oder erfasst werden, während in dem passiven Teilnahmezustand Datenpakete mit Textinformationen zu der ersten Mobilstation übertragen werden, welche auf einer Anzeige der ersten Mobilstation ausgegeben werden.

Hat der Benutzer der ersten Mobilstation seine Sitzungspriorisierung derart festgelegt, dass er in der ersten Kommunikationssitzung in einem aktiven Teilnahmezustand teilnimmt und in der zweiten Kommunikationssitzung in einem passiven Teilnahmezustand teilnimmt, so kann in einem gerade dargestellten Verfahren jedoch das Problem auftreten, dass die Mobilstationen der zweiten Kommunikationsgruppe bzw. Kommunikationssitzung nicht über die Aktivitäten der ersten Mobilstation bzw. deren Benutzer in der ersten Kommunikationsgruppe bzw. Kommunikationssitzung informiert sind, d.h. dass sie nicht wissen, ob der Benutzer der ersten Mobilstation in seiner Kommunikationssitzung gerade spricht oder nur zuhört. Folglich sind die Mobilstation bzw. Teilnehmer der zweiten Kommunikationssitzung nicht in der Lage, etwaige Reaktionen oder das Ausbleiben von Reaktionen des Benutzers der ersten Mobilstation richtig zu beurteilen, und somit Störungen oder vergebliche Signalisierung bzw. Anfragen an den eventuell gerade aktiven sprechenden Benutzer der ersten Mobilstation zu vermeiden.

Um nun unnötigen Signalisierungsaufwand zu vermeiden und um schon im vorhinein den Aktivitätsstatus eines Teilnehmers bzw. einer Mobilstation (mehrfach teilnehmende Mobilstation) zu kennen, welche an mehreren Kommunikationssitzungen parallel teilnimmt, wie im vorliegenden Fall die erste Mobilstation, soll nun gemäß dieses Aspekts der Erfindung den Mobilstationen der Kommunikationssitzungen, an welchen eine mehrfach teilnehmende Mobilstation passiv teilnimmt, der aktuelle Aktivitätsstatus dieser mehrfach teilnehmenden Mobilstation in deren aktiver Kommunikationssitzung mitgeteilt werden. Genauer gesagt sollen die Mobilstationen in den passiven Kommunikationssitzungen erfahren, ob die an ihrer Kommunikationssitzung passiv teilnehmende mehrfach teilnehmende Mobilstation in ihrer aktiven Kommunikationssitzung gerade das Sprachrecht hat und Sprachnachrichten bzw. Datenpakete mit Sprachinformationen an die übrigen Mobilstation der aktiven Kommunikationssitzung sendet (aktiv bzw. "busy") oder nur zuhört und folglich Sprachnachrichten empfängt (passiv).

Somit ist eine geplante Reaktion bzw. eine Planung des Kommunikationssitzungsablaufes in gewisser Hinsicht für alle an verschiedenen Kommunikationssitzungen beteiligten Teilnehmern bzw. Mobilstationen möglich. Wird für den Aufbau bzw. die Durchführung der Kommunikationssitzung ein SIP (Session Initiation Protocol)-Protokoll bzw. RTP (Real Time Protocol)-Protokoll verwendet, so ergibt sich durch die Übertragung des Aktivitätsstatus der direkte Vorteil der Einsparung an SIP-und auch RTP-Signalisierungen, da ein Ansprechen oder eine geforderte Reaktion von einem gerade sprechenden (mehrfach teilnehmenden) Teilnehmer in einer Kommunikationssitzung durch Teilnehmer einer anderen Session in dem eigentlich "belegten/beschäftigten" Moment vermieden wird (Signalisierung liegt in kByte Bereich). Dies bedeutet natürlich dann konsequent auch Einsparung von "Air Traffic" (Luftverkehr) in Drahtlos-Systemen. Weitere Vorteile ergeben sich derart, dass dem (mehrfach teilnehmenden) Teilnehmer in den unterschiedlichen Kommunikationssitzungen nichts "verloren geht" in den Diskussionen.

Gleichzeitig erfolgt eine Signalisierung an die Teilnehmer der unterschiedlichen Kommunikationssitzungen, dass der Teilnehmer (oder die Teilnehmer, welche an mehreren parallelen Sessions teilnehmen) an einer der unterschiedlichen Kommunikationssitzung parallel aktiv teilnimmt derart, dass er gerade "aktiv" bzw. beschäftigt ist und spricht. Durch diese Signalisierung der Aktivität eines (mehrfach teilnehmenden) Teilnehmers können sich die anderen Teilnehmer auf evtl. Verzögerungen des (mehrfach teilnehmenden) Teilnehmers in den Reaktionen einstellen bzw. den Teilnehmer erst dann in die Gesprächsrunde einbeziehen, wenn die Signalisierung (des Aktivitätsstatus) es sichtbar macht, dass dieser Teilnehmer in einer anderen für ihn "aktiven" Kommunikationssitzung gerade kein aktiver Sprecher ist.

Es werden also neue bzw. erweiterte Signalisierungen vorgeschlagen, welche den Aktivitätsstatus der aktiven Teilnahme an einer primären ("aktiven") Kommunikationssitzung, aber auch die passive Teilnahme an einer sekundären ("passiven") Kommunikationssitzung näher spezifiziert und vorteilhafterweise visuell darstellt. Diese neue Signalisierung des Aktivitätsstatus kann einen Wert "PB" für den Status "beschäftigt" oder "busy" annehmen, womit den Teilnehmern einer sekundären Kommunikationssitzung mitgeteilt wird, dass der (mehrfach teilnehmende) Teilnehmer kurzzeitig besetzt ist, da er in seiner primären Kommunikationssitzung einen agierenden Part übernommen hat.

Gemäß einem weiteren Aspekt der Erfindung wird ein Kommunikationssystem, bestehend aus einer zentralen Steuereinrichtung und einer Mehrzahl von Mobilstationen geschaffen, das dafür ausgelegt ist, ein oben dargestelltes Verfahren durchzuführen. Dabei kann das Kommunikationssystem insbesondere gemäß dem UMTS(Universal Mobile Telecommunications System)-Standard oder dem GPRS(General Packet Radio Service)-Standard arbeiten. Die Mobilstationen können dabei insbesondere als Mobiltelefone oder Mobilfunkgeräte ausgebildet sein, welche über eine Luftschnittstelle mit einem Basisstationssystem des Kommunikationssystems kommunizieren. Die zentrale Steuereinrichtung kann dabei in einem Kernnetzwerk oder "Core"-Netzwerk des Kommunikationssystems angeordnet sein.

Gemäß einem weiteren Aspekt der Erfindung wird eine zentrale Steuereinrichtung in einem Kommunikationssystem geschaffen, die dafür ausgelegt ist, ein oben dargestelltes Verfahren zu realisieren.

Bevorzugte Ausführungsformen der Erfindung werden nachfolgend Bezug nehmend auf die beiliegenden Zeichnungen näher erläutert. Es zeigen:
- Figur 1: eine schematische Darstellung einer allgemeinen Architektur eines Kommunikationssystems zur Realisierung eines "Push-to-Talk"-Dienstes;
- Figur 2: eine schematische Darstellung der Architektur eines Kommunikationssystems zur Realisierung einer PTT(Push-to-Talk)-Sitzung gemäß einer Ausführungsform der Erfindung;
- Figur 3: eine schematische Darstellung eines Mobiltelefons, welches dafür ausgelegt ist, an einer PTT-Sitzung gemäß der Ausführungsform der Erfindung teilzunehmen;
- Figur 4: eine weitere schematische Darstellung des Mobiltelefons von Figur 3, zur Ausgabe von Informationen sowohl von einer "aktiven" als auch von einer "passiven" Kommunikationssitzung;
- Figur 5: einen beispielhaften Signalisierungsablauf zur Übermittlung der Sitzungspriorisierung in einem SIP-Request-Element bzw. einer SIP-Request-Nachricht;
- Figur 6: einen beispielhaften Signalisierungsablauf zur Übermittlung der Sitzungspriorisierung in einem SIP-Info-Element bzw. einer SIP-INFO-Nachricht;
- Figur 7: einen beispielhafter Signalisierungsablauf zur Übermittlung der Sitzungspriorisierung zur Markierung eines passiven Teilnahmezustands in einem SIP-Info-Element;
- Figur 8: einen beispielhafter Signalisierungsablauf zur Übermittlung des Aktivitätsstatus "aktiv" bzw. "busy" eines Mehrfachteilnehmers an die Teilnehmer einer von diesem als passiv priorisierten Kommunikationssitzung;
- Figur 9: eine Abwandlung des Signalisierungsablaufs von Figur 8;
- Figur 10: einen beispielhafter Signalisierungsablauf zur Übermittlung des Aktivitätsstatus "passiv" eines Mehrfachteilnehmers an die Teilnehmer einer von diesem als passiv priorisierten Kommunikationssitzung;
- Figur 11: eine schematische Darstellung eines Mobiltelefons, welches dafür ausgelegt ist, an einer PTT-Sitzung mit erweiterter Signalisierung zwischen Kommunikationssitzungen beispielsweise gemäß Figuren 8 bis 10 teilzunehmen.

Bevor nun eine konkrete Ausführungsform der Erfindung bezüglich einer Architektur eines Kommunikationssystems zur Realisierung von "Multi-PTT-Sitzungen" dargestellt wird, soll nun eine kurze Einführung zu PTT(Push-to-talk)-Diensten in Mobilfunknetzen gegeben werden.

In dem Mobilfunkstandard UMTS sind viele paketorientierte Dienste vorgesehen. Der Unterschied zwischen paketorientierten und leitungsorientierten Diensten besteht hauptsächlich darin, dass es bei paketorientierten Diensten keine ständige Verbindung zwischen einem Sender (einem ersten Mobilfunkgerät oder Mobiltelefon) und einem Empfänger (einem zweiten Mobilfunkgerät bzw. Mobiltelefon) gibt, wie es in der Sprachtelefonie üblich ist, sondern, dass der Sender einzelne Datenpakete versendet, die jeweils mit der Adresse des Empfängers des Paketes versehen sind. Es besteht somit eine logische Verbindung zwischen dem Sender und dem oder den Empfängern, aber keine direkte physikalische Verbindung. Die meisten Daten- und Multimediadienste sind paketorientiert. Sprache dagegen wird meistens aufgrund der Duplexfähigkeit und der harten Echtzeitbedingung leitungsorientiert übermittelt. Es gibt allerdings auch Sprachdienste, in denen eine paketorientierte Übermittlung stattfindet, wie beispielsweise der Dienst "Voice-over-IP". In diesem Fall wird die Sprache digitalisiert, komprimiert und paketorientiert zum Empfänger versendet. Dort werden die Datenpakete wieder dekomprimiert und schließlich von digital nach analog gewandelt und schließlich als Sprache ausgegeben. Die Paketübertragung erfolgt nach dem Internet-Protokoll (IP). Dieses ist zustandslos und arbeitet meistens nach der "Best-Effort"-Methode. Dies bedeutet, es werden die Parameter verwendet, die eine maximale Verbindungsqualität leisten. Es kann allerdings keine Verbindungsqualität (Quality-of-Service = QoS) zugesichert werden. So können je nach Netzauslastung auch schon mal für einen Dienst unzumutbar lange Verzögerungszeiten oder zu kleine Bandbreiten zur Verfügung stehen. Bei Sprachdiensten wirkt sich dieses Verhalten als Verzögerungszeit aus, die eine direkte Kommunikation sehr erschwert oder sogar ganz verhindert. Es kann darüber hinaus geschehen, dass einzelne Stücke der Sprache ganz verworfen werden müssen. Aus diesem Grund ist eine Sprachanwendung bzw. ein Sprachdienst, der keine so hohen Anforderungen an die Bandbreite und die maximale Verzögerungszeit stellt, hierbei bevorzugt zu realisieren. Insbesondere ist hier ein Punkt-zu-Mehrpunkt-Sprachdienst (Punkt-zu-Punkt-Sprachdienst ist ein Sonderfall des Punkt-zu-Mehrpunkt-Sprachdienstes) vorteilhaft, der auf die Duplexfähigkeit verzichtet. Das bedeutet, es ist ein Dienst vorteilhaft, bei dem zu einer bestimmten Zeit nur ein Teilnehmer sprechen kann.

Die Sprache dieses Teilnehmers wird dann digitalisiert und die Datenpakete werden an jeweilige Empfänger versendet. Diese hören die Sprachnachricht des Senders nach einer kurzen Verzögerungszeit. Es handelt sich dabei um eine "Nahe-Echtzeit"-Anwendung. Nach der Methode zur Anforderung des Senderechts kann eine derartige Anwendung auch als "Push-to-Talk"-Anwendung bzw. als ein "Push-to-Talk"-Dienst bezeichnet werden. Da nur eine Person bzw. ein Teilnehmer zu einer bestimmten Zeit sprechen kann, muss dies entsprechend signalisiert werden. Dies kann derartig geschehen, indem eine Person, die sprechen möchte, an ihrem Mobiltelefon einen Knopf oder eine Taste drückt. Eine zentrale Steuereinrichtung in dem Mobilfunksystem erteilt dieser Person daraufhin das Recht, eine Sprachnachricht senden zu können, sobald kein weiterer Teilnehmer gerade sendet. Da normalerweise die Datenpakete mit den Sprachnachrichten zwischengespeichert werden, können sich die Teilnehmer dieses "Push-to-Talk"-Dienstes die Sprachnachrichten auch wiederholen lassen. Diese Art der Kommunikation erfordert eine gewisse Disziplin, wie sie auch vom CB(Citizen Band)-Funk bekannt ist. Eine effektive Art der Kommunikation ist das Versenden von Statusmeldungen. So ist es beispielsweise sinnvoll, zu signalisieren, ob ein Teilnehmer die erhaltene Sprachnachricht akustisch und/oder inhaltlich verstanden hat, und ob der Teilnehmer mit dem Inhalt einverstanden ist oder nicht. Auch eine kurze Unterbrechung eines Teilnehmers an der Kommunikation sollte signalisiert werden.

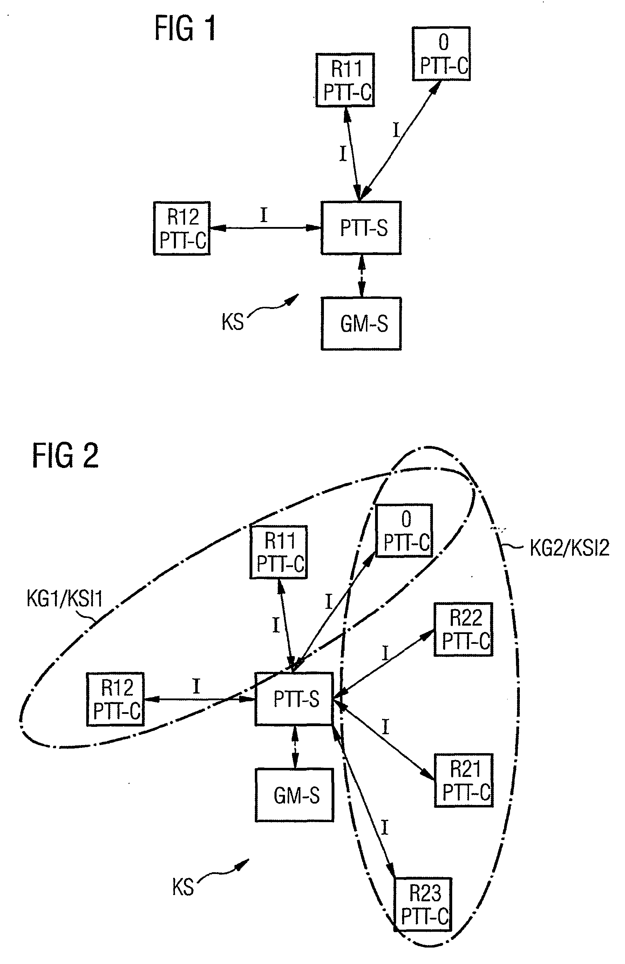

Kurz gesagt ermöglicht ein derartiger gerade dargestellter Push-to-Talk- oder PTT-Dienst einem Sender, eine Sprachnachricht an einen oder mehrere Empfänger gleichzeitig nach dem Halbduplex-Verfahren zu versenden (es kann nur der Sender sprechen bzw. Sprachnachrichten versenden, wobei ihn die Empfänger nicht unterbrechen dürfen). Dabei ist es vorteilhaft, die Datenpakete mit den Sprachnachrichten oder Sprachinformationen während des Sprechens des Senders schon über das Netzwerk zu verteilen (d. h. das "Streaming" während des Sprechens des Senders schon zu beginnen). Somit ähnelt der PTT-Dienst aus Sicht eines Benutzers dem klassischen CB-Funk, jedoch mit der Erweiterung, dass der Sender auch weit entfernte Empfänger, die über ein Mobilfunknetzwerk erreichbar sind, ansprechen kann. Ein klassischer Anwendungsfall, bei dem ein gerade beschriebener PTT-Dienst verwendet werden kann, sei im Folgenden kurz dargestellt. Ein Chef will seinen fünf Mitarbeitern schnell eine Sprachnachricht mitteilen. Dazu aktiviert er über das Menü seines Mobiltelefons bzw. Mobilfunkgeräts den PTT-Dienst und wählt als angesprochene bzw. als Empfänger seine fünf Mitarbeiter aus (beispielsweise aus seinem Telefonbuch). Nach Etablieren des PTT-Dienstes zwischen seinem und den Mobiltelefonen (oder anderen PTT-fähige mobilen Endgeräten) seiner Mitarbeiter drückt der Chef eine spezielle dafür eingerichtete Taste seines Mobiltelefons und spricht seine Sprachnachricht, welche von einem Mikrofon des Mobiltelefons erfasst, von einer Verarbeitungseinrichtung in dem Mobiltelefon verarbeitet und über ein Kommunikationsnetzwerk, wie ein oben erwähntes Mobilfunknetzwerk, an die Mitarbeiter weitergeleitet wird. Der Dienst kann dabei so definiert sein, dass die Sprachnachricht des Chefs direkt aus dem Lautsprecher der jeweiligen Mobiltelefone der Empfänger ausgegeben wird. Es ist aber auch denkbar, dass zunächst die Empfänger bzw. Mitarbeiter nur eine Mitteilung erhalten, dass für sie eine Sprachnachricht des Chefs bereitsteht, wobei die Mitarbeiter diese Mitteilung zunächst bestätigen müssen, bevor die Sprachnachricht auf ihre Mobiltelefone übertragen und durch einen Lautsprecher ausgegeben wird. Eine grundlegende Architektur eines Kommunikationssystems zur Realisierung des gerade beschriebenen PTT-Dienstes ist in Figur 1 dargestellt und soll unten ausführlicher erläutert werden.

Neben dem Aufbauen einer einzigen Kommunikationssitzung zwischen Mobiltelefonen einer Kommunikationsgruppe kann für bestimmte Personen, wie Projektleiter oder andere Führungskräfte die gleichzeitige Teilnahme an mehreren (mindestens zwei unterschiedlichen) PTT-Sitzungen interessant sein, wodurch unterschiedliche Interessengruppen zeitgleich bedient werden können. Gemäß einer unten dargestellten Ausführungsform der Erfindung wird somit gewährleistet, dass ein Teilnehmer an mindestens zwei parallelen PTT-Sitzungen teilnehmen kann, ohne ständig zwischen den Sitzungen hin und her zu schalten, was im Stand der Technik ein ständiges Auf- und Abbauen von Sitzungen bedeuten würde. Gemäß der Ausführungsform der Erfindung wird es einem Teilnehmer ermöglicht, die parallelen Sitzungen zu priorisieren und dementsprechend die Ausgaben (ob als Sprachausgabe über einen Lautsprecher oder als Textausgabe über ein Display) auf dem Display einzustellen. Somit ist ein Verfolgen der unterschiedlichen Sitzungen auf unterschiedlichen Ein- und Ausgabeeinrichtungen gesichert. Finden die Kommunikationssitzungen im Rahmen des sogenannten "Session Initiation Protocols" (SIP) statt, so kann gemäß der Ausführungsform der Erfindung eine Einsparung an SIP-Signalisierungen erreicht werden, da ein ständiges Auf- und Abbauen von aktiven Verbindungen vermieden wird (eine Signalisierung liegt dabei im kByte-Bereich). Dies bedeutet natürlich dann konsequent auch eine Einsparung von Luftverkehr (air traffic) in drahtlosen Systemen (wireless systems).

Gemäß bestimmter Ausgestaltungen der Ausführungsform ergeben sich weitere Vorteile derart, dass dem Teilnehmer, welcher an mehreren Sitzungen teilnehmen möchte, in den unterschiedlichen Sitzungen nichts "verloren geht". Gleichzeitig kann eine Signalisierung an die jeweiligen Teilnehmer der unterschiedlichen Sitzungen erfolgen, dass der "Mehrfach"-Teilnehmer oder weitere "Mehrfach"-Teilnehmer (Teilnehmer, welche an mehreren parallelen Sitzungen teilnehmen) an unterschiedlichen PTT-Sitzungen parallel teilnehmen und eine persönliche Sitzungspriorisierung (abhängig von der Wichtigkeit oder anderen Bedingungen) zwischen den parallelen Sitzungen vorgenommen haben. Durch diese Signalisierung der Sitzungspriorisierung können sich die anderen Teilnehmer in den jeweiligen Kommunikationssitzungen bzw. Kommunikationsgruppen auf eventuelle geringe Verzögerungen eines Mehrfach-Teilnehmers in den Antwortzeiten einstellen.

Es sei nun auf Figur 1 verwiesen, in der eine allgemeine bzw. grundlegende Architektur eines Kommunikationssystems KS zur Realisierung eines PTT-Dienstes gezeigt ist. Das Kommunikationssystem KS weist dabei eine zentrale Steuereinrichtung in der Form eines PTT-Servers PTT-S auf, welcher über jeweilige Schnittstellen I mit sogenannten PTT-Klienten oder PTT-Teilnehmern 0, R1, R2 in Verbindung steht. Diese PTT-Teilnehmer O, R1 und R2 können eine Kommunikationsgruppe darstellen, zwischen der über den PTT-Server PTT-S eine Kommunikationssitzung etabliert werden kann. Das Kommunikationssystem kann dabei beispielsweise in der Form eines Mobilfunksystems ausgebildet sein, wobei die jeweiligen PTT-Teilnehmer von Mobiltelefonen oder Mobilfunkgeräten (oder anderen PTTfähigen Geräten mit Funkmodul und entsprechender Software, sogenannter PTT-Client-Software) gebildet werden, welche über eine Luftschnittstelle I mit einem Basisstationssystem des Mobilfunksystems in Verbindung stehen, das in einem Kernnetzwerk (Core Network) dem PTT-Server PTT-S beinhaltet. Somit kann das Kommunikationssystem KS nach dem UMTS-Standard arbeiten, bei dem die Schnittstelle I eine Verbindung von den Mobiltelefonen oder Mobilfunkgeräten O, R1, R2 zu dem sogenannten "Radio Access Network" RAN und darüber schließlich zu dem Kernnetzwerk und dem IP-Multimedia-Subsystem herstellt.

Der PTT-Server PTT-S führt Listen von Kommunikationsgruppen, d.h. Listen von Teilnehmern, welche in einer·Kommunikationssitzung miteinander verbunden werden können. Diese Listen enthalten die Adressen der Teilnehmer oder Klienten (in den Figuren werden die Klienten durch die Bezeichnung PTT-C gekennzeichnet). Ferner regelt der PTT-Server PTT-S das An- und Abmelden von Teilnehmern an Kommunikationssitzungen, baut Sitzungen auf, leitet die Daten bzw. Datenpakete in dem paketorientierten Kommunikationssystem zu den jeweiligen Teilnehmern und tarifiert die Dienste. Ferner vergibt der PTT-Server PTT-S auch das Recht bzw. die Freigabe zum Senden eines Teilnehmers an die jeweiligen anderen Teilnehmer. Da es gemäß der unten beschriebenen Ausführungsform der Erfindung auch möglich ist, dass ein Teilnehmer bzw. ein Mobiltelefon an mehreren Kommunikationssitzungen teilnehmen kann, verwaltet der PTT-Server PTT-S auch die Zuteilung von Datenpaketen mit Sprachinformationen an Teilnehmer, welche an mehr als einer PTT-Sitzung teilnehmen und verteilt die Zuordnung, ob aktive Teilnahme oder passive Teilnahme an die jeweiligen Teilnehmer der Kommunikationssitzungen als Ergänzungsstatus zum eigentlichen Status der "Mehrfach"-Teilnehmer. Die jeweiligen Statusinformationen werden für die Dauer einer Sitzung auf dem PTT-Server gespeichert. Die Teilnehmer der Kommunikationssitzungen melden sich bei den PTT-Sitzungen an und ab, signalisieren ihren Sendewunsch und senden Statusmeldungen während einer bzw. den Sitzungen. Die Daten bzw. Datenpakete, welche von dem PTT-Server zu den jeweiligen Teilnehmern übertragen werden, werden von diesen empfangen, verarbeitet und schließlich den jeweiligen Benutzern ausgegeben, wie es unten näher erläutert werden wird.

Der Vollständigkeit halber sei es erwähnt, dass zur Organisation der Kommunikationsgruppen von Teilnehmern an einer PTT-Sitzung ein sogenannter Gruppen-Management-Server GM-S verwendet werden kann, welcher mit dem PTT-Server PTT-S verbunden ist. Es ist jedoch auch denkbar, dass die Funktionalität dieses Gruppen-Management-Servers auch im PTT-Server selbst liegen kann.

Es sei nun auf Figur 2 verwiesen, in der eine schematische Architektur eines Kommunikationssystems KS zur Darstellung einer Ausführungsform der Erfindung dargestellt ist. Das Kommunikationssystem KS von Figur 2 entspricht im wesentlichen dem Kommunikationssystem KS von Figur 1, wobei lediglich hier zwei Kommunikationsgruppen von Teilnehmern mit dem PTT-Server PTT-S in Verbindung stehen. Die Funktionalität des PTT-Servers PTT-S sowie des Gruppen-Management-Servers GM-S entspricht der der Komponenten, wie sie in Figur 1 bereits dargestellt sind.

Wie bereits erwähnt, gibt es bei dem Kommunikationssystem KS gemäß Figur 2 zwei Kommunikationsgruppen, wobei zwischen den jeweiligen Teilnehmern einer Kommunikationsgruppe eine jeweilige Kommunikationssitzung KSI1 (für die erste Gruppe) und KSI2 (für die zweite Gruppe) aufgebaut werden kann. Die erste Kommunikationsgruppe KG1 setzt sich dabei aus den Teilnehmern O, R11, und R12 zusammen, während sich die zweite Kommunikationsgruppe KG2 aus den Teilnehmern O, R21, R22 und R23 zusammensetzt. Das bedeutet, der Teilnehmer O bzw. dessen Mobiltelefon oder Mobilfunkgerät befindet sich sowohl in der ersten als auch in der zweiten Kommunikationsgruppe. Gemäß dem Stand der Technik müsste der Teilnehmer O somit regelmäßig zwischen einer Sitzung KSI1 mit der ersten Kommunikationsgruppe und der Sitzung KSI2 mit einer zweiten Kommunikationsgruppe hin und her schalten ("Switchen"), was praktisch ein ständiges Auf- und Abbauen der Teilnahme an den jeweiligen Sitzungen der ersten und der zweiten Kommunikationsgruppe bedeuten würde (das Auf- und Abbauen bedeutet, wie eingangs bereits erwähnt, einen erheblichen Signalisierungsaufwand).

Gemäß der Ausführungsform der Erfindung soll dies jedoch einfacher und mit geringerem verfahrenstechnischem Aufwand realisiert werden, um dem Teilnehmer O eine unkomplizierte Teilnahme an parallel stattfindenden Kommunikationssitzungen zu ermöglichen.

Die Kommunikationssitzung KSI1 der ersten Kommunikationsgruppe (im Folgenden als erste Kommunikationssitzung bezeichnet) startet mit den Teilnehmern O, R11 und R12 derart, dass der Teilnehmer O der einladende Teilnehmer ist und R11, R12 die einzuladenden Teilnehmer der ersten Sitzung sind. Eine Kommunikationssitzung kann dabei gemäß dem "Session Initiation Protocol" (SIP) eingeleitet bzw. durchgeführt werden. Das Thema der Kommunikationssitzung ist für die Ausführungsform unerheblich. Der Teilnehmer O initiiert die Sitzung, während die Teilnehmer R11 und R12 "zuhören". Wie bereits oben erwähnt, regelt der PTT-Server PTT-S den Verlauf der Sitzung, d.h. er organisiert, welcher von den zwei Teilnehmern wann sprechen darf (wenn er eine entsprechende Anfrage oder einen Sprachwunsch gestellt hat). Die Kommunikation in einer Kommunikationssitzung läuft mittels akustischer oder gesprochener Sprache ab, was bedeutet, dass der Teilnehmer O in sein Mobiltelefon oder Mobilfunkgerät spricht, während er eine dafür ausgelegte PTT-Taste an seinem Gerät gedrückt hat und die Teilnehmer R11 und R12 hören zu. Ausführlicher gesprochen, wird die gesprochene Sprache des Teilnehmers O von seinem Gerät durch ein Mikrofon erfasst, verarbeitet und in Form von Datenpaketen mit Sprachinformationen zu dem PTT-Server geschickt, welcher die Datenpakete mit den Sprachinformationen zu den jeweiligen Teilnehmern R11 und R12 weiterleitet oder "routet".

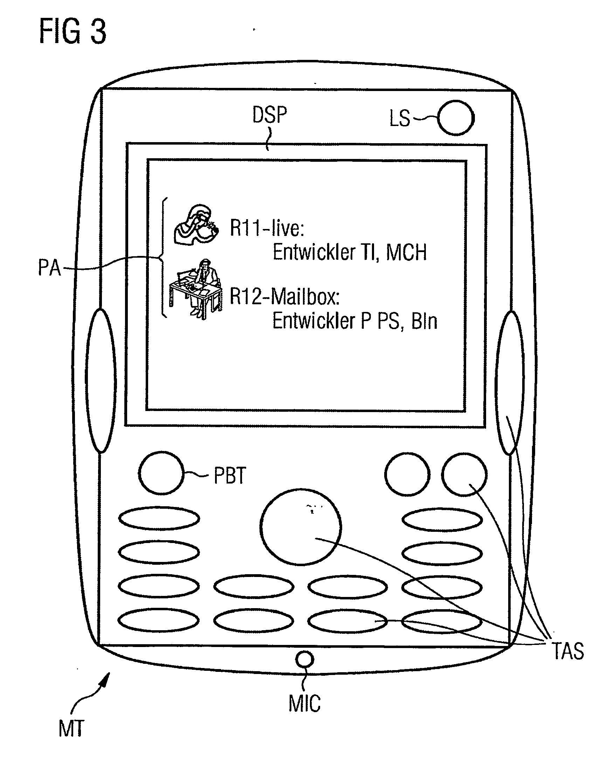

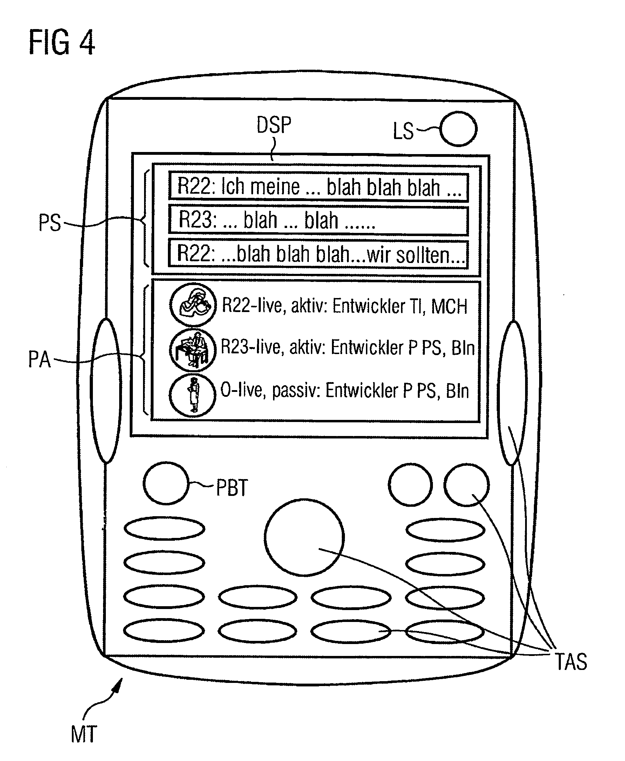

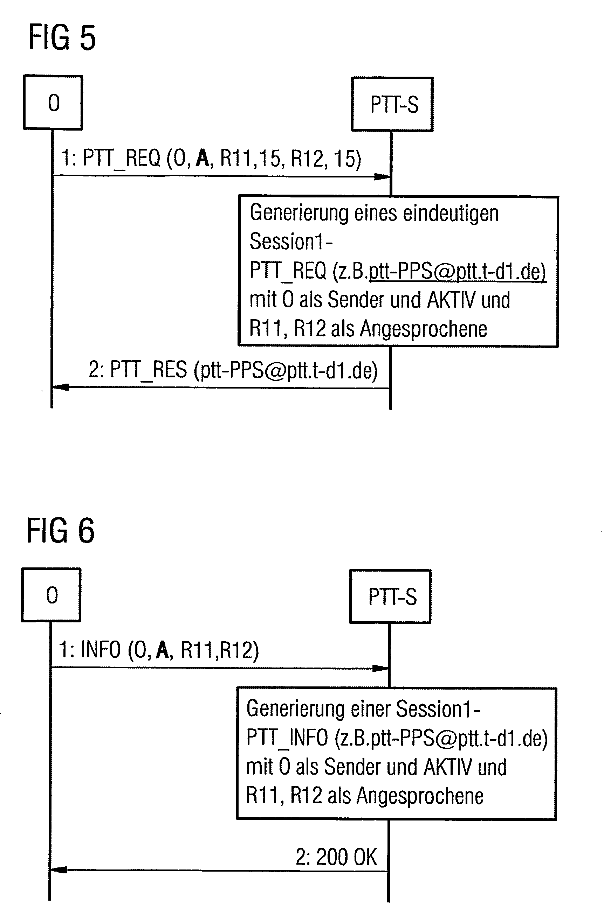

Wie bereits erwähnt, ist der Teilnehmer O sowohl Mitglied der ersten Kommunikationsgruppe KG1 als auch der zweiten Kommunikationsgruppe KG2 und kann somit an der ersten (KSI1) als auch an der zweiten (KSI2) Kommunikationssitzung teilnehmen. Jedoch soll gemäß der Ausführungsform der Erfindung eine Priorisierung der jeweiligen möglichen Kommunikationssitzungen durch den Teilnehmer O vorgenommen werden. Dabei signalisiert der Teilnehmer O an den PTT-Server PTT-S im Rahmen einer Sitzungspriorisierungs-Nachricht (welche unter Verwendung des SIP-Protokolls eine sogenannte "SIP-Info"-Nachricht oder eine "SIP-Notify"-Nachricht sein kann), dass die bestehende erste PTT-Sitzung (die der Teilnehmer O gerade gestartet hat) als "aktive" Sitzung von den Teilnehmer O angesehen wird (vgl. dazu auch Figuren 5 und 6). Das bedeutet, dass diese erste Sitzung für den Teilnehmer O die wichtigste Sitzung ist, für den Fall, dass noch eine Einladung zu einer zweiten PTT-Sitzung kommt, welche zeitgleich bzw. parallel zur ersten Sitzung stattfindet. "Aktiv" bedeutet hier, dass alle Aktionen des Teilnehmers O sprachlicher Natur sind, d.h. dass der Teilnehmer 0 Daten oder Datenpakete mit Sprachinformationen versendet oder empfängt bzw. sprachliche Aussage werden auch als sprachliche Ausgaben an die Teilnehmer R11, R12 wiedergegeben. Die "aktive" Einordnung der Sitzung wird, wie bereits erwähnt, an den PTT-Server PTT-S beispielsweise mittels der SIP-Info-Nachricht signalisiert und auf diesem gespeichert. Diese Einordnung der Sitzung bzw. Sitzungspriorisierung des Teilnehmers 0 wird dann von dem PTT-Server an die Teilnehmer R11 und R12 weitergeleitet, um auch diesen Teilnehmern R11 und R12 den Teilnahmestatus an der Kommunikationssitzung des O zu vermitteln. Ferner wird gemäß dieser Ausführungsform von dem PTT-Server eine Präsenz-Liste erstellt, welche die jeweiligen Teilnahmezustände an der Kommunikationssitzung der einzelnen Teilnehmer einer Kommunikationsgruppe angibt. Beispielsweise kann hier ein Teilnahmezustand "Live" angegeben werden, welcher angibt, dass der entsprechende Teilnehmer mittels Sprachkommunikation an der aktuellen Kommunikationssitzung teilnimmt, während ein Teilnahmezustand "verhindert" oder "Mailbox" angibt, dass dieser Teilnehmer der Kommunikationsgruppe gerade nicht aktuell über eine Sprachkommunikation an der Kommunikationssitzung teilnimmt, oder schließlich der Teilnahmezustand "verspätet" angibt, dass dieser Teilnehmer der Kommunikationsgruppe erst später zur Kommunikationssitzung hinzustößt. Wie es später noch in den Figuren 3 und 4 zu sehen ist, können diese jeweiligen Teilnahmezustände mittels bestimmter Symbole veranschaulicht werden.

Es sei bemerkt, dass nicht nur der Teilnehmer O in mehreren Kommunikationsgruppen dabei sein kann und somit an mehreren Kommunikationssitzungen parallel teilnehmen kann, sondern auch die übrigen Mitglieder der ersten Kommunikationsgruppe, nämlich die Teilnehmer R11 und R12. Entsprechend können auch diese Teilnehmer eine Sitzungspriorisierung vornehmen und dem PTT-Server mitteilen. Das bedeutet, auch die Teilnehmer R11 und R12 können ihren "aktiven" Zustand beispielsweise bei Verwendung des SIP-Protokolls mittels der Info-SIP-Nachricht an den PTT-Server mitteilen und damit an alle an der ersten Kommunikationssitzung beteiligten Teilnehmer signalisieren, beispielsweise wenn die Teilnehmer erwarten, auch noch Einladungen zu Sitzungen anderer Kommunikationsgruppen zu bekommen.

Nachdem nun die erste Kommunikationssitzung der ersten Kommunikationsgruppe aufgebaut ist, soll nun eine zweite Kommunikationssitzung der zweiten oben genannten Kommunikationsgruppe aufgebaut werden. Beispielsweise kann der Aufbau dieser zweiten Kommunikationssitzung von dem Teilnehmer R22 gestartet werden, so dass die zweite Kommunikationssitzung zeitgleich zur ersten Kommunikationssitzung stattfindet. Teilnehmer dieser zweiten Kommunikationssitzung sind der Teilnehmer R22 als Einladender, und die Teilnehmer R21, R23 und O als Eingeladene. Dabei entsteht nun der Zustand, dass der Teilnehmer O jetzt an zeitgleich zwei unabhängigen PTT-Sitzungen teilnehmen soll. Der Teilnehmer O bekommt von dem PTT-Server PTT-S die Einladung des R22 zur zweiten Kommunikationssitzung zugestellt. Der PTT-Server PTT-S bemerkt nun den "Konflikt", dass der Teilnehmer 0 nun an zwei Kommunikationssitzungen parallel teilnehmen soll und verwaltet entsprechend der oben erwähnten Sitzungspriorisierung, die ihm der Teilnehmer O zugesandt hat, die beiden Kommunikationssitzungen. Das bedeutet, die erste Kommunikationssitzung soll als aktive Kommunikationssitzung behandelt werden, während die zweite Kommunikationssitzung als passive Kommunikationssitzung behandelt werden soll. Wie bereits erwähnt, ist das Kennzeichen einer aktiven Kommunikationssitzung, dass eine Sprachkommunikation zwischen den jeweiligen Sitzungsteilnehmern stattfindet. Um nun für einen "Mehrfach"-Teilnehmer, wie den Teilnehmer O zu unterscheiden, welche Nachrichten von einer aktiven und welche von einer passiven Kommunikationssitzung stammen, wird gemäß dieser Ausführungsform festgelegt, dass Nachrichten von einer passiven Kommunikationssitzung lediglich in Textform zu dem Teilnehmer O übermittelt werden. Somit wird der PTT-Server PTT-S, der ja beide momentan aktiven Kommunikationssitzungen verwaltet, alle sprachlichen Ausgaben, d. h. alle Datenpakete mit Sprachinformationen, der zweiten Kommunikationssitzung KSI2, welche an den Teilnehmer O verteilt werden, einer Sprache-zu-Text-Umsetzung unterziehen, damit der Teilnehmer O von der passiven Kommunikationssitzung Datenpakete mit Textinformationen zugestellt bekommt. Der PTT-Server PTT-S hat, wie bereits erwähnt, entsprechend der Sitzungspriorisierung des Teilnehmers O für diesen die Sitzung als "passiv" gesetzt, was der PTT-Server PTT-S dann an alle übrigen Teilnehmer R21, R22 und R23 der zweiten Kommunikationssitzung KSI2 signalisiert, beispielsweise mittels eines speziellen Symbols in einer Präsenz-Liste der Teilnehmer der zweiten Kommunikationssitzung, welche diesen Teilnehmern übermittelt werden (vgl. Figur 3).

Im Folgenden soll nun eine mögliche weitere Ausgestaltung des Leitens bzw. "Routens" von Datenpaketen dargestellt werden, insbesondere entsprechend dem Fall, ob die Datenpakete von einer aktiven oder passiven Kommunikationssitzung stammen. Kennzeichen dieser Ausgestaltung ist es, dass in dem gerade beschriebenen Fall, bei dem der Teilnehmer O an zwei Kommunikationssitzungen teilnimmt, nämlich an einer für ihn Aktiven (KSI1) und an einer Passiven (KSI2), die Datenpakete aus den einzelnen Kommunikationssitzungen von dem PTT-Server speziell gekennzeichnet werden sollen, so dass das Mobiltelefon oder Mobilfunkgerät (oder eine spezielle Anwendung darauf, der sogenannte PTT-Client) des Teilnehmers O die Datenpakete den richtigen Kommunikationssitzungen oder PTT-Sitzungen zuordnen kann. Es ist also die Idee, dass der PTT-Server, der den Teilnahmezustand eines jeden Teilnehmers an einer Kommunikationssitzung kennt (insbesondere nachdem er durch eine Sitzungspriorisierungs-Mitteilung von den jeweiligen Teilnehmern beispielsweise mittels der SIP-Elemente "Info", "Notify" oder "Request" mitgeteilt bekommen hat, an welcher Kommunikationssitzung ein bestimmter Teilnehmer aktiv oder passiv teilnehmen möchte), die jeweiligen Datenpakete zu den Teilnehmern speziell kennzeichnet. Mittels der Kennzeichnung ist es dann den Teilnehmern bzw. Anwendungen auf deren mobilen Geräten möglich, die empfangenen Datenpakete zu sortieren und den entsprechenden Kommunikationssitzungen - bei Teilnahme an mehreren Kommunikationssitzungen - zuzuteilen. Dies soll im Folgenden nun ausführlicher erläutert werden.

Wie oben auch, beginnt eine erste Kommunikationssitzung KSI1 der ersten Kommunikationsgruppe KG1 mit den Teilnehmern O, R11, R12, wobei die erste Kommunikationssitzung von dem Teilnehmer O initiiert wird. Die erste Kommunikationssitzung läuft, wie bereits erläutert, wie eine ganz normale PTT-Sitzung ab, wobei der Teilnehmer O spricht und die Teilnehmer R11, R12 diesem zuhören, da die PTT-Kommunikaton ja im Halbduplex-Betrieb abläuft. Nun wird eine zweite Kommunikationssitzung KSI2 der zweiten Kommunikationsgruppe KG2 von dem Teilnehmer R22 initiiert, wobei die Teilnehmer R21, R23 und auch wieder der Teilnehmer O eingeladen werden. Die eingeladenen Teilnehmer der zweiten Kommunikationssitzung - auch der Teilnehmer O - nehmen die Einladung des Teilnehmers R22 an, wobei nach entsprechender Sitzungspriorisierung des Teilnehmers O der Teilnahmezustand an der zweiten Kommunikationssitzung des Teilnehmers O auf "passiv" gesetzt wird. Dies hat zur Folge, dass nun gemäß der Ausgestaltung ab sofort alle Sprachnachrichten bzw. Datenpakete mit Sprachinformationen, welche in Richtung des Teilnehmers O geleitet werden, gekennzeichnet werden, zu welcher Kommunikationssitzung sie gehören, d. h. entweder zur ersten Kommunikationssitzung oder zur zweiten Kommunikationssitzung. In diesem Beispiel ist die Kennzeichnung nur für die Datenpakete zu dem Teilnehmer O notwendig, da nur dieser an zwei Kommunikationssitzungen teilnimmt und eine Sitzungspriorisierung ("Aktiv"/"Passiv"-Signalisierung) an den PTT-Server PTT-S signalisiert hatte.

Die gekennzeichneten Datenpakete mit den Sprachinformationen werden nun von der Anwendung (PTT-Client) auf dem mobilen Endgerät des Teilnehmers O der jeweiligen Kommunikationssitzung zugeordnet. Wie bereits erwähnt, erfolgt die Ausgabe von Sprachinformationen aus einer aktiven Sitzung (hier der ersten Kommunikationssitzung) akustisch über einen Lautsprecher, während die Sprachinformationen einer passiven Sitzung (hier der zweiten Kommunikationssitzung) zunächst in Textinformationen umgewandelt werden, welche schließlich auf einem Display des mobilen Endgeräts des Teilnehmers O als Text ausgegeben werden können. In jedem Fall ist es für den Teilnehmer O somit möglich, an zwei Kommunikationssitzungen parallel teilzunehmen, wobei er die Sprachinformationen der aktiven Sitzung akustisch in Form von Sprache empfängt, während er die Informationen der passiven Kommunikationssitzung als Text über sein Display verfolgen kann. Es sei erwähnt, dass anstelle der Sprache-zu-Text-Umwandlung in dem mobilen Endgerät des Teilnehmers O es auch möglich ist, dass eine derartige Umwandlung bzw. Konvertierung auch direkt schon vom PTT-Server PTT-S vorgenommen werden kann, so dass neben der Kennzeichnung der jeweiligen Datenpakete zu dem Teilnehmer O auch schon in den Datenpaketen der aktiven Sitzung nur Sprachinformationen enthalten sind, während in den Datenpaketen der passiven Sitzung nur Textinformationen enthalten sind, dadurch wird der Rechenaufwand in den mobilen Endgeräten, insbesondere dem des Teilnehmers 0 minimiert.

Die Kennzeichnung der Datenpakete, aus welchen Kommunikationssitzungen stammen, bzw. ob es sich um Datenpakete mit Sprachinformationen oder Textinformationen handelt, kann dabei in einem sogenannten "Header"-Feld oder Kopffeld eines jeweiligen Datenpaketes erfolgen. Dabei kann gemäß dieser Ausgestaltung der Erfindung ein "a" für aktiv oder ein "p" für passiv verwendet werden, welche dann auch binär codiert werden können, beispielsweise "0" für aktiv und "1" für passiv. Dazu muss natürlich ein entsprechendes Kopffeld in einem Datenpaket bereitgestellt werden bzw. eine entsprechende Bitstelle definiert werden, um es dem PTT-Client auf dem mobilen Endgerät zu ermöglichen, eine Auswertung dieser Bitstelle vorzunehmen.

Gemäß einer besonders bevorzugten Ausführungsform findet eine oben erwähnte Kommunikationssitzung unter Verwendung des SIP-Protokolls und RTP(Real Time Protocol)-Protokolls statt. RTP dient der Übertragung der eigentlichen zeitkritischen Sprach-Datenpakete und auch von Textdatenpaketen, welche zeitkritisch sind. Das SIP-Protokoll dient dann der Kommunikation zwischen den Teilnehmern der Kommunikationssitzung, um eine Kommunikationssitzung aufzubauen und aufrecht zu erhalten. Das bedeutet konkret, SIP ist mit dem Signalisierungsfluss beschäftigt, der notwendig ist, um zur Kommunikationssitzung Sprachdaten bzw. Datenpakete mit Sprachnachrichten in Echtzeit zu übertragen. Auf die Ausführungen oben bezogen bedeutet dies beispielsweise, dass SIP signalisiert bzw. die Signalisierung übernimmt, welche Teilnehmer aktiv und/oder passiv in welchen Kommunikationssitzungen teilnehmen. Das RTP-Protokoll überträgt die Datenpakete mit Sprachnachrichten des sprechenden Teilnehmers einer jeden Kommunikationssitzung an die jeweiligen anderen Teilnehmer oder eben eventuell die Datenpakete mit Textnachrichten (die zuvor vom PTT-Server umgewandelt wurden) an (Mehrfach-)Teilnehmer, welche diese Kommunikationssitzung "passiv" verfolgen. Dabei erfolgt die gerade beschriebene Kennzeichnung der Datenpakete (z.B. "0" für aktiv und "1" für passiv) auf der RTP-Ebene.

Es sei nun auf Figur 3 verwiesen, in der eine schematische Darstellung eines mobilen Endgerätes in der Form eines Mobiltelefons eines Teilnehmers an einer PTT-Sitzung gezeigt ist. In diesem Fall ist beispielsweise das Mobiltelefon des Teilnehmers O gezeigt, genauer gesagt in einem Zustand, nachdem dieser eine erste Kommunikationssitzung mit seiner ersten Kommunikationsgruppe, bestehend aus den Teilnehmern R11, R12 und O initiiert hat, wie es zu Figur 2 erläutert worden ist.

Das Mobiltelefon MT weist dabei einen Lautsprecher LS, ein Display zum Anzeigen von Zeichen und Bildern DSP, verschiedene Tasten bzw. Bedienelemente TAS, einen speziellen PTT-Knopf PBT und ein Mikrofon MIC auf. So ist es beispielsweise möglich, dass der Teilnehmer O mittels der Tasten TAS und einem speziellen in der Anzeige DSP erscheinenden Menü (hier nicht dargestellt) die erste Kommunikationssitzung mit den Teilnehmern der ersten Kommunikationsgruppe initiiert, woraufhin in einem speziellen Präsenzbereich PA der Anzeige DSP eine Präsenz-Liste der Teilnehmer der Kommunikationsgruppe mit ihren jeweiligen Teilnahmezuständen aufgeführt sind. Wie es in Figur 3 zu sehen ist, ist hier angedeutet, dass der Teilnehmer R11 "live" an der Kommunikationssitzung teilnimmt, also Sprachnachrichten beispielsweise des Teilnehmers O empfangen und eventuell beantworten kann, während der Teilnehmer R12 gerade nicht aktiv an der Kommunikationssitzung teilnimmt, sondern lediglich über seine "Mailbox" beteiligt ist. Neben dem Teilnahmezustand der jeweiligen Teilnehmer kann auch deren Stellung in einem Betrieb bzw. der dessen Standort angegeben sein. Möchte der Teilnehmer 0 beispielsweise Sprachnachrichten diesen anderen Teilnehmern der Kommunikationssitzung übermitteln, so kann er die PTT-Taste PBT drücken, so dass dieser Sprachwunsch dem PTT-Server PTT-S (vergleiche Figur 2) mitgeteilt wird und dieser dem Teilnehmer O das Sprachrecht zuweist. Nun wird die von dem Teilnehmer 0 gesprochene Sprache durch das Mikrofon MIC aufgezeichnet, in dem Mobiltelefon MT digitalisiert und in Form von Datenpaketen mit Sprachinformationen an den PTT-Server übermittelt, welcher dann die Datenpakete an die übrigen Sitzungsteilnehmer weiterleitet. Erhält der Teilnehmer O Sprachnachrichten in Form von Datenpaketen mit Sprachinformationen von anderen Sitzungsteilnehmern, so können diese Sprachnachrichten über den Lautsprecher LS ausgegeben werden.

Es sei nun auf Figur 4 verwiesen, in der wieder ein Mobiltelefon MT eines Teilnehmers (hier wieder des Teilnehmers O) an einer Kommunikationssitzung mit dem gleichen Aufbau wie in Figur 3 erläutert, gezeigt ist. Im Unterschied zur Figur 3 weist nun das Display DSP des Mobiltelefons MT neben dem Präsenzbereich PA einen weiteren Bereich PS zur Darstellung der Informationen aus der passiven Kommunikationssitzung auf. Es ist dabei möglich, im Präsenzbereich PA die Teilnehmer einer aktiven Kommunikationssitzung (wie es in Figur 3 gezeigt ist) darzustellen, oder aber die Teilnehmer einer passiven Kommunikationssitzung. Ein Umschalten zwischen den Ansichten kann mittels einer der Tasten TAS erfolgen. Hier im Beispiel von Figur 4 sind nun im Präsenzbereich PA die Teilnehmer der passiven Kommunikationssitzung aus Sicht des Teilnehmers O, nämlich Teilnehmer der zweiten Kommunikationsgruppe, R22, R23 und O aufgeführt, mit denen, wie es in Figur 2 erläutert worden ist, der Teilnehmer O entsprechend seiner Sitzungspriorisierung eine passive Kommunikationssitzung unterhält. Die Sprachnachrichten dieser Kommunikationsteilnehmer werden über das Display DSP im Bereich PS ausgegeben. Es ist hierbei möglich, zur besseren Sichtbarmachung im Bereich PA die die Teilnehmer repräsentierenden Symbole mit weiteren Symbolen bzw. Farben zu versehen, um deren Teilnahmestatus an einer Kommunikationssitzung besser zu visualiseren. Beispielsweise kann, wie es in der Figur gezeigt ist, um bestimmte Teilnehmer ein farbiger Kreis gezogen werden, dessen Farbe angibt, ob der Teilnehmer aktiv oder passiv an der Kommunikationssitzung teilnimmt.

Damit der Teilnehmer O auch die Informationen verfolgen kann, welche in der durch ihn passiv gekennzeichneten Kommunikationsgruppe ausgetauscht werden, werden die jeweiligen Nachrichten der Kommunikationsgruppe (hier der zweiten Kommunikationsgruppe KSI2) in dem Bereich PS der Anzeige DSP dargestellt. Wie es hier zu sehen ist, werden die einzelnen Nachrichten der Teilnehmer R22 und R23 jeweils in gestrichelten Kästen dargestellt, so dass der Teilnehmer 0 diese Nachrichten den einzelnen Teilnehmern R22 und R23 zuordnen kann. Wie bereits erwähnt, können diese Textnachrichten oder Textin formationen bereits von dem PTT-Server in diese Textform umgewandelt worden sein und dem Teilnehmer O in Textform zugesandt worden sein.

Es sei nun auf Figur 5 verwiesen, in der ein beispielhafter Signalisierungsablauf zum Mitteilen einer festgelegten Sitzungspriorisierung dargestellt ist. Ausgehend von dem zu Figur 2 erläuterten Fall, hat der zur ersten Kommunikationsgruppe (bestehend aus den Teilnehmern O, R11 und R12) gehörende Teilnehmer O festgelegt, dass die gerade von ihm initiierte erste Kommunikationssitzung KSI1 basierend auf der ersten Kommunikationsgruppe als "aktiv" anzusehen ist. Wie bereits zu Figur 2 erläutert, kann eine Kommunikationssitzung bzw. PTT-Sitzung gemäß dem SIP-Protokoll durchgeführt werden. Somit ist es dann möglich, dass der Teilnehmer O dem PTT-Server PTT-S mittels einer SIP-Request-Nachricht "PTT_REQ (O, A, R11, 15, R12, 15)" für die erste Kommunikationssitzung (Session1) mit der ersten Kommunikationsgruppe mitteilt, dass er für diese Kommunikationssitzung einen aktiven Teilnahmezustand wünscht. Der PTT-Server empfängt diese Aufforderung des Teilnehmers O und speichert sie während der Kommunikationssitzung ab. Wie es ferner bezüglich Figur 2 erläutert worden ist, kann diese Sitzungspriorisierung des Teilnehmers O auch den anderen Teilnehmern R11 und R12 mitgeteilt werden, beispielsweise dadurch, dass im entsprechenden Eintrag des Teilnehmers O in einer Präsenzliste auf den Displays (vgl. den Bereich PA in den Figuren 3 und 4) der jeweiligen anderen Teilnehmer ein Vermerk vorgesehen wird. Anschließend schickt der PTT-Server PTT-S eine Bestätigung der Aufforderung des Teilnehmers O in Form der Nachricht "PTT_RES (ptt-PPS@ptt.t-d1.de)".

Natürlich kann der Teilnehmer O die erste Kommunikationssitzung als "passiv" einstufen, wobei er in diesem Fall wiederum eine SIP-Request-Nachricht an den PTT-Server schicken kann, nur dass hier der Buchstabe "A" in oben genannter Nachricht beispielsweise durch den Buchstaben "P" zu ersetzen ist.

Es ist auch möglich, dass der Teilnehmer O seine Sitzungspriorisierung dem PTT-Server mittels einer SIP-Info-Nachricht übermittelt, welche gemäß Figur 6 beispielsweise die Form hat "INFO (O, A, R11, R12)". Entsprechend schickt der PTT-Server zur Bestätigung eine Nachricht "200 OK" an den Teilnehmer O zurück. Durch Ersetzen des Buchstabens "A" durch beispielsweise einem Buchstaben "P" kann der Teilnehmer O auch bekunden, dass er an der vorliegenden Kommunikationssitzung nur "passiv" teilnehmen möchte.

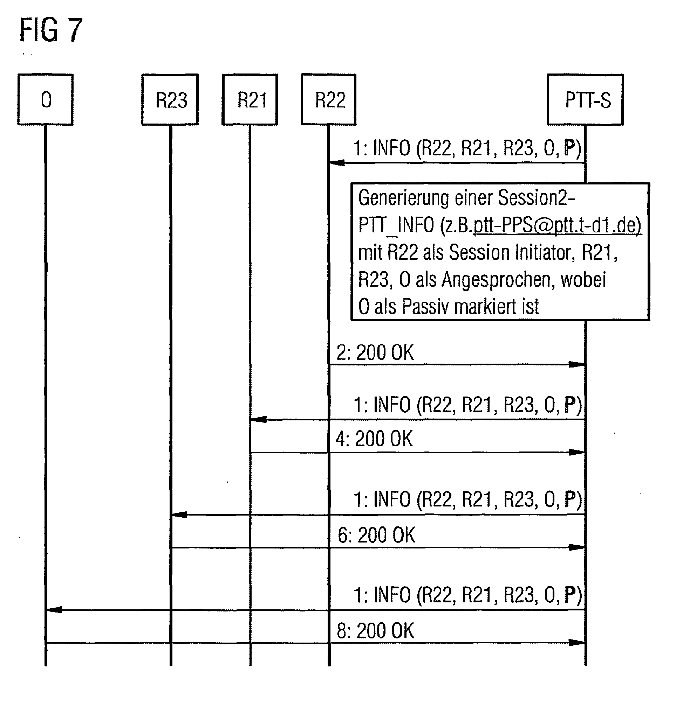

Es sei nun auf Figur 7 verwiesen, in der ein beispielhafter Signalisierungsablauf gezeigt ist, mittels dem der in Figur 2 dargestellten, von Teilnehmer R22 (Session Initiator) initierten zweiten Kommunikationssitzung KSI2, bestehend aus den Teilnehmern R21, R22, R23 und O mitgeteilt werden soll, dass der Teilnehmer 0 in einer zweiten Kommunikationssitzung KSI2, basierend auf der zweiten Kommunikationsgruppe als passiv einzustufen ist bzw. im passiven Teilnahmezustand dabei sein möchte. Wie es in der Figur zu sehen ist, ergeht an jeden Teilnehmer der zweiten Kommunikationssitzung ausgehend von dem PTT-Server PTT-S eine SIP-Info-Nachricht "Info (R22, R21, R23, 0, P)", um auszudrücken, dass der Teilnehmer O für die zweite Kommunikationssitzung mit der zweiten Kommunikationsgruppe einen passiven ("P") Teilnahmezustand wünscht. Die jeweiligen Teilnehmer bestätigen den Erhalt dieser Info-Nachricht mit einer Nachricht "200 OK".

Wie oben beispielsweise mit Bezug auf Figur 2 oder 7 bereits ausgeführt, können alle Teilnehmer der aktuell stattfindenden Kommunikationssitzungen bzw. PTT-Sitzungen über Teilnehmer informiert werden, welche an mehreren Kommunikationssitzungen KSI1, KSI2 teilnehmen und damit ist bei diesen bekannt, dass entsprechend dem obigen Beispiel der Teilnehmer O ab jetzt mehrere Kommunikationssitzungen verfolgt und eventuelle Reaktionen oder Reaktionszeiten einkalkuliert (in der ersten oder der zweiten Kommunikationssitzung) werden sollten.

Bei einer oben dargestellten Implementierung von parallel stattfindenden Kommunikationssitzungen kann folgende Problematik auftreten. Zwischen den Kommunikationssitzungen findet für die Teilnehmer, welche nicht parallel an mehreren Kommunikationssitzungen teilnehmen, kein Informationsfluss statt, der ihnen den Status bzw. Aktivitätsstatus der Teilnehmer, welche parallel in mehreren Kommunikationssitzungen agieren, mitteilt. So beispielsweise werden die Teilnehmer der zweiten Kommunikationssitzung KSI2 (die passive Kommunikationssitzung für den Teilnehmer O) gemäß obiger Implementierung nicht darüber informiert, wenn der Teilnehmer O in der ersten Kommunikationssitzung KSI1 (der für ihn aktiven Kommunikationssitzung) gerade agiert, d.h. spricht bzw. das Sprachrecht hat und aktiv die Diskusssion dort beeinflusst. Die Teilnehmer der zweiten Kommunikationssitzung (im obigen Beispiel der R21, R22, R23 neben dem O) werden also gemäß ihrer Kommunikationssitzung den Teilnehmer O weiterhin zwar als passiven Teilnehmer sehen, aber glauben, dass dieser die Diskussion (auf Textbasis) in der zweiten Kommunikationssitzung bzw. zweiten Kommunikationsgruppe "mithört" bzw. ansprechbar ist. Wenn aber der Teilnehmer O in der ersten Kommunikationssitzung gerade spricht, kann er aufgrund seiner Konzentration darauf schlecht der zweiten Kommunikationssitzung (auf Textbasis) folgen. Da der Teilnehmer O in einer derartigen Situation nicht auf Ereignisse in der zweiten Kommunikationssitzung KSI2 reagieren kann, werden also die Teilnehmer der zweiten Kommunikationssitzung eventuelle Anfragen an den Teilnehmer O wiederholen oder sogar die Kommunikationssitzung zu dem Teilnehmer O beenden, da sie annehmen müssen, dass das Interesse von O ist nicht mehr vorhanden ist. Der Teilnehmer O wiederum kann nicht antworten oder reagieren, da er ja aktiv/sprachlich in der ersten Kommunikationssitzung KSI1 agiert. Es wäre auch entgegen der herkömmlichen Implementierung von Kommunikationssitzungen bzw. PTT-Sitzungen, die erste Kommunikationssitzung KSI1 im laufenden agierenden Sprechverhalten des Teilnehmers O kurz zu unterbrechen, um die zweite Kommunikationssitzung KSI2 bzw. deren Teilnehmer über diesen Zustand bzw. Aktivitätsstatus des Teilnehmers O zu informieren.

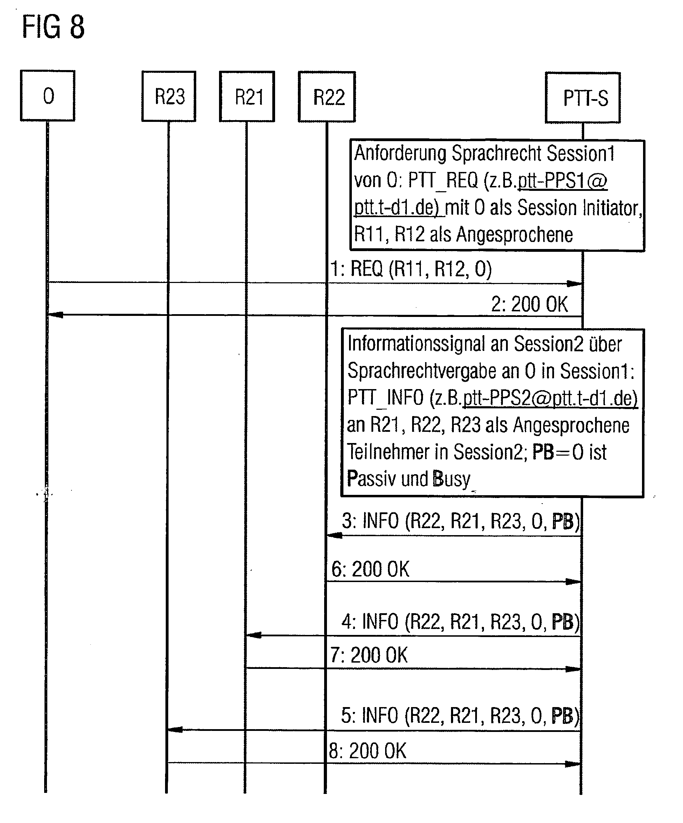

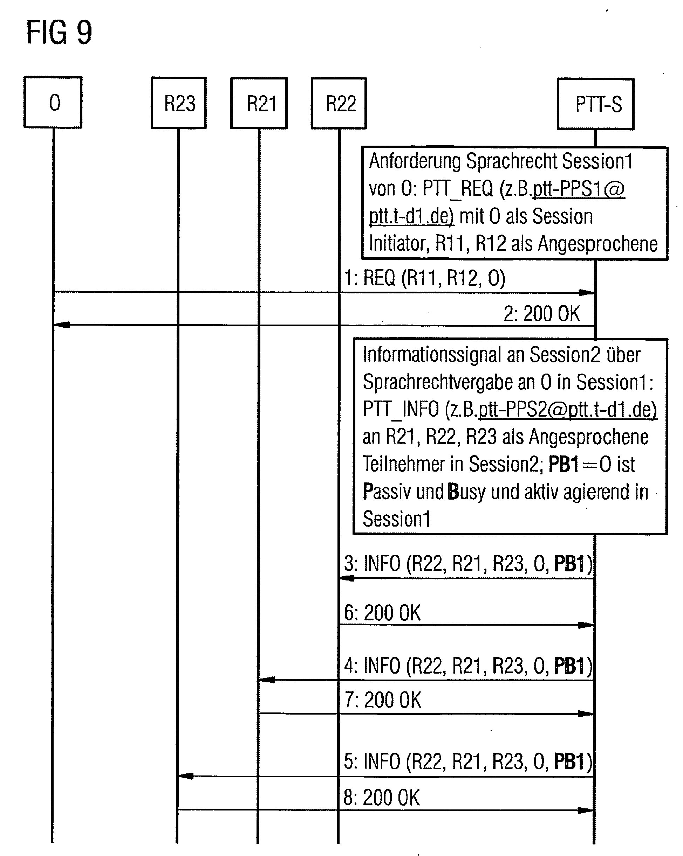

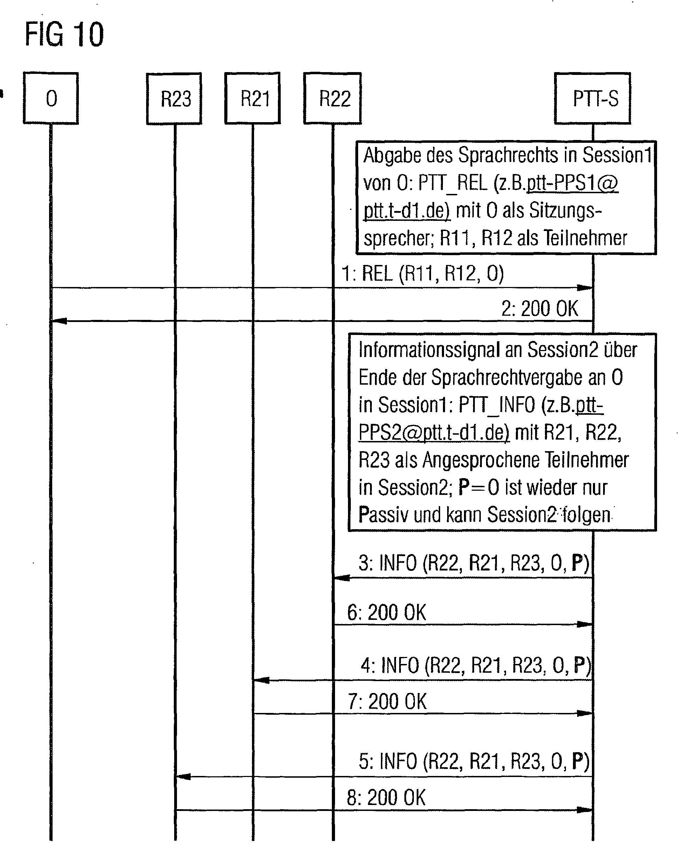

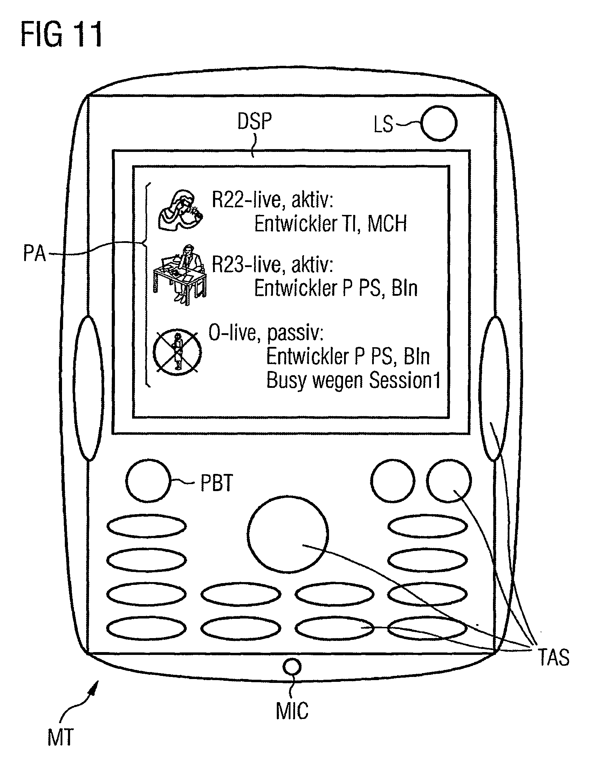

Diese Problematik soll nun gemäß der folgenden Ausführungsform mittel einer erweiterten Signalisierung gelöst werden. Das Agieren des Teilnehmers O in der ersten Kommunikationssitzung, d.h. dass er gerade in der Diskussion (bei gedrücktem PTT-Knopf PBT) spricht, kann vom PTT-Server PTT-S ausgenutzt werden und den (übrigen) Teilnehmern der zweiten Kommunikationssitzung (R21, R22, R23) signalisiert werden. Das bedeutet, der Umstand, dass der Teilnehmer 0 um in der ersten Kommunikationssitzung aktiv zu agieren, eine Sprachberechtigung durch Drücken der PTT-Taste beim Server PTT-S anfordern muss, kann ausgenutzt werden und das aktive Agieren bzw. Sprechen von O bei erfolgreicher Sprachvergabe für die erste Kommunikationssitzung KSI1 an die zweite Kommunikationssitzung KSI2 signalisiert werden, um den (übrigen) Teilnehmern der zweiten Kommunikationssitzung mitzuteilen, das der Teilnehmer O gerade spricht (vgl. auch Figuren 8 und 9) und beispielsweise auf Anfragen in der zweiten Kommunikationssitzung eigentlich nicht reagieren kann. Dieses Signalisieren kann vorteilhafterweise dann bei den Teilnehmern bzw. deren Mobilstationen in der Präsenz-Liste in dem Präsenzbereich PA (vgl. Figur 11) als ein Blinken oder Durchstreichen des Symbols bezüglich des Teilnehmers O realisiert werden. Beispielsweise kann das "passive" Symbol von Teilnehmer O in der zweiten Kommunikationssitzung dann in der Präsenz-Liste der Teilnehmer der zweiten Kommunikationssitzung blinken. Damit wird diesen Teilnehmern signalisiert, dass der Teilnehmer O gerade in seiner aktiven Kommunikationssitzung, der ersten Kommunikationssitzung, agiert (sprachlich zur Diskussion beiträgt) und somit Anfragen oder Kommentare zur zweiten Kommunikationssitzung momentan nicht liefern kann, jedoch diese aber zeitversetzt beantworten kann, wenn der agierende oder aktive Status beendet ist. Das Beenden des Agierens wird dem PTT-Server PTT-S von dem Teilnehmer O aus durch Loslassen der PTT-Taste PBT mitgeteilt (vgl. auch Figur 10) und damit auch den Teilnehmern der zweiten Kommunikationssitzung, indem das "passive" Symbol in der Präsenz-Liste nicht mehr blinkt.

Im Folgenden soll der Aufbau von zwei parallelen Kommunikationssitzungen bei erweiterter Signalisierung zwischen den Kommunikationssitzungen, wie es gerade beschrieben worden ist, nochmals ausführlich erläutert werden. Es wird wieder von einem prinzipiellen Kommunikationssystem KS ausgegangen, wie es in Figur 2 gezeigt ist.

Eine erste Kommunikationssitzung KSI1 beginnt mit den Teilnehmern O, R11 und R12, wobei die Kommunikationssitzung vom Teilnehmer O initiiert wird. Die erste Kommunikationssitzung KSI1 verläuft wie eine ganz herkömmliche PTT-Sitzung, bei der der Teilnehmer O beispielsweise spricht und die Teilnehmer R11 und R12 zuhören, da ja ein Halbduplex-Betrieb zugrunde gelegt wird. Nun wird auch eine zweite Kommunikationssitzung KSI2 von dem Teilnehmer R22 initiiert und dabei werden die Teilnehmer R21, R23 und auch der O eingeladen. Die eingeladenen Teilnehmer der zweiten Kommunikationssitzung, auch 0, nehmen die Einladung an, wobei von dem PTT-Server PTT-S der Teilnahmezustand des Teilnehmers 0 auf "passiv" gesetzt wird, weil der O die erste Kommunikationssitzung bereits als "aktiv" deklariert hat (vgl. dazu auch die Erläuterung oben zu Figur 2). Dies hat zur Folge das ab sofort alle Datenpakete von dem PTT-Server (mittel RTP) in Richtung des Teilnehmers 0 gekennzeichnet werden, zu welcher Kommunikationssitzung sie gehören, zur Kommunikationssitzung KSI1 oder KSI2. Die Kennzeichnung ist im Beispiel nur für den Teilnehmer O notwendig, da nur dieser gleichzeitig an zwei Kommunikationssitzungen teilnimmt und eine Sitzungspriorisierung ("aktiv"/"passiv" Signalisierung) an den PTT-Server signalisiert hatte.

Die gekennzeichneten Datenpakete werden nun von einer Anwendung (PTT-Client) auf der Mobilstation des Teilnehmers O der jeweiligen Kommunikationssitzung zugeordnet. Der O sieht auf dem Display DSP seiner Mobilstation dann die PTT-Ausgaben zur zweiten Kommunikationssitzung als Text (die Sprachnachrichten aus der zweiten Kommunikationssitzung werden wie oben erwähnt vom PTT-Server vorteilhafterweise in Text umgewandelt und dann als Textdatenpakete zu dem O gesendet) und hört die PTT-Ausgaben zur ersten Kommunikationssitzung als Sprachausgaben durch den Lautsprecher LS oder Ohrhörer seiner Mobilstation (und dies alles gleichzeitig). Der PTT-Client sortiert entsprechend der Kennzeichnung vom PTT-Server die Datenpakete der jeweiligen Ausgabe zur jeweiligen Kommunikationssitzung zu. Die Kennzeichnung der Sprach- oder Textpakete erfolgt wieder im Headerfeld eines jeden Paketes, wobei ein "a" für aktiv oder "p" für passiv oder eine entsprechende Binärkodierung verwendet werden kann.

Der Teilnehmer O hatte im Beispiel bis zu diesem Zeitpunkt beide Kommunikationssitzungen lediglich nicht agierend verfolgt, nämlich die Kommunikationssitzung KSI1 als aktive Sitzung mittels Ohrhörer und die Kommunikationssitzung KSI2 als passive Session mittels Textnachrichten im Display (vgl. auch beispielsweise Figur 4). Jetzt wird der Teilnehmer O von dem Teilnehmer R12 der ersten Kommunikationssitzung KSI1 aufgefordert, einen Vorgang zu erläutern, welcher zwischen den Teilnehmern R11, R12 und O diskutiert werden soll. Der Teilnehmer O drückt dazu die PTT-Taste PBT und beginnt die geforderte Erklärung zum Vorgang an R11 und R12 darzulegen. Mit dem Drücken der PTT-Taste PBT wird dem PTT-Server PTT-S signalisiert (der O fordert vom PTT-Server die Sprachrechte an und bekommt sie, weil kein anderer, also weder R11 noch R12 sprechen will), dass der Teilnehmer O gerade in der ersten Kommunikationssitzung agiert bzw. beschäftigt ist. Diese Signalisierung (vgl. dazu auch die Figuren 8 oder 9), also die Sprachrechtvergabe an 0 wird nun aber auch an die zweite Kommunikationssitzung bzw. deren Teilnehmer weitergeleitet, um den Teilnehmern R21, R22, R23 zu signalisieren, dass der Teilnehmer O auf die Meinungen und Anforderungen der zweiten Kommunikationssitzung nicht augenblicklich reagieren kann, da er aktuell die erste Kommunikationssitzung mit Informationen versorgt. Das Signal in der jeweiligen Präsenz-Liste der Teilnehmer der zweiten Kommunikationssitzung kann ein Blinken oder ein Durchstreichen (Kreuz) des Symbols bezüglich des Teilnehmers O (vgl. dazu auch Figur 11), welches bereits den passiven Status in der zweiten Kommunikationssitzung (Session2) signalisierte, umfassen. Das Blinken bzw. das durchgestrichene Symbol des Teilnehmers 0 teilt den Teilnehmern der zweiten Kommunikationssitzung KSI2 mit, dass der Teilnehmer O zwar passiv an ihrer Kommunikationssitzung teilnimmt, aber gerade aktiv in der ersten Kommunikationssitzung (Session1) agiert bzw. dort beschäftigt ist, und jegliche Reaktionen oder Anfragen an den Teilnehmer O sich verzögern, bis der Teilnehmer O sein aktives Agieren in der ersten Kommunikationssitzung aufgrund des Loslassens der PTT-Taste PBT beendet hat (vgl. dazu Figur 10). Der Teilnehmer 0 hat dann zwar immer noch einen aktiven Teilnahmezustand in der ersten und einen passiven Teilnahmezustand in der zweiten Kommunikationssitzung, jedoch hat er nun einen keinen aktiven oder beschäftigten Aktivitätszustand mehr in der ersten Kommunikationssitzung, so dass er jetzt die zweite Kommunikationssitzung wieder besser (auf Textbasis) verfolgen kann, als wenn er in der ersten Kommunikationssitzung agiert.

Es sei nun auf Figur 8 verwiesen, in der ein beispielhafter Signalisierungsablauf gezeigt ist, mittels dem der in Figur 2 dargestellten zweiten Kommunikationsgruppe KG2 der zweiten Kommunikationssitzung KSI2 bestehend aus den Teilnehmern R21, R22, R23 und 0 gemäß der oben erwähnten erweiterten Signalisierung zwischen den Kommunikationssitzungen mitgeteilt werden soll, dass der Teilnehmer O in einer ersten, von ihm bezüglich des Teilnahmestatus, als aktiv priorisierten Kommunikationssitzung (Session1), gerade agiert bzw. beschäftigt ("busy") ist. Wie es in der Figur zu sehen ist, sendet der Teilnehmer 0 (insbesondere ausgelöst durch das Drücken der PTT-Taste PBT an seinem Mobiltelefon) eine Anfrage REQ(R11,R12,O) zum Anfordern eines Sprachrechts an den PTT-Server PTT-S, woraufhin an jeden aktiven Teilnehmer der zweiten Kommunikationssitzung (Session2) ausgehend von dem PTT-Server PTT-S eine SIP-Info-Nachricht "Info (R22, R21, R23, 0, PB)" ergeht, um auszudrücken, dass der Teilnehmer 0 in der zweiten Kommunikationssitzung passiv und in der ersten Kommunikationssitzung beschäftigt ("PB") ist bzw. dort das Sprachrecht hat. Die jeweiligen Teilnehmer bestätigen den Erhalt dieser Info-Nachricht mit einer Nachricht "200 OK". Anstelle der SIP-Info-Nachricht kann eine entsprechende SIP-Notify-Nachricht zur Signalisierung verwendet werden.

Für den Fall, dass ein Teilnehmer, wie der Teilnehmer O an mehreren Kommunikationssitzungen teilnimmt, ist es auch denkbar, dass in einer SIP-Info-Nachricht oder SIP-Notify-Nachricht konkret angegeben werden kann, in welcher Kommunikationssitzung der "Mehrfach"-Teilnehmer teilnimmt. So kann bei einem zu Figur 8 analogen Signalisierungsablauf in Figur 9 anstelle des Parameter "PB" ein Parameter "PB1" angeben, dass der Teilnehmer O gerade konkret in der ersten Kommunikationssitzung beschäftigt ist.

Es sei nun auf Figur 10 verwiesen, in der ein beispielhafter Signalisierungsablauf gezeigt ist, mittels dem der in Figur 2 dargestellten zweiten Kommunikationsgruppe KG2 der zweiten Kommunikationssitzung KSI2 bestehend aus den Teilnehmern R21, R22, R23 und O gemäß der oben erwähnten erweiterten Signalisierung zwischen den Kommunikationssitzungen mitgeteilt werden soll, dass der Teilnehmer O in der ersten, von ihm bezüglich des Teilnahmestatus, als aktiv priorisierten Kommunikationssitzung KSI1, nicht bzw. nicht mehr agiert bzw. beschäftigt ist. Wie es in der Figur zu sehen ist, sendet der Teilnehmer O (insbesondere ausgelöst durch das Loslassen der PTT-Taste PBT an seinem Mobiltelefon) eine Freigabenachricht REL (R11,R12,O) zum Abgeben seines Sprachrechts an den PTT-Server PTT-S, woraufhin an jeden aktiven Teilnehmer der zweiten Kommunikationssitzung ausgehend von dem PTT-Server PTT-S eine SIP-Info-Nachricht "Info (R22, R21, R23, O, P)" ergeht, um auszudrücken, dass der Teilnehmer O in der zweiten Kommunikationssitzung passiv, sowie in der ersten Kommunikationssitzung nicht (mehr) beschäftigt ("P") ist und folglich der zweiten Kommunikationssitzung (auf Textbasis) wieder zuhören kann. Die jeweiligen Teilnehmer bestätigen den Erhalt dieser Info-Nachricht mit einer Nachricht "200 OK". Anstelle der SIP-Info-Nachricht kann eine entsprechende SIP-Notify-Nachricht zur Signalisierung verwendet werden.

Es sei nun auf Figur 11 verwiesen, in der eine schematische Darstellung eines mobilen Endgerätes in der Form eines Mobiltelefons MT eines Teilnehmers an einer PTT-Sitzung gezeigt ist. In diesem Fall ist beispielsweise das Mobiltelefon MT des Teilnehmers R21 gezeigt, genauer gesagt in einem Zustand, nachdem dieser eine zweite Kommunikationssitzung mit seiner zweiten Kommunikationsgruppe, bestehend aus den Teilnehmern R21, R22, R23 und 0 initiiert hat, wie es zu Figur 2 in Verbindung mit der erweiterten Signalisierung zwischen den Kommunikationssitzungen erläutert worden ist.

Das Mobiltelefon MT ist dabei wieder aufgebaut, wie das in Figur 3 oder 4 gezeigte Mobiltelefon, weshalb für eine ausführliche Erläuterung der Komponenten auf diese Figuren verwiesen wird. So ist es beispielsweise möglich, dass der Teilnehmer R21 mittels der Tasten TAS und einem speziellen in der Anzeige DSP erscheinenden Menü (hier nicht dargestellt) die zweite Kommunikationssitzung mit den Teilnehmern der zweiten Kommunikationsgruppe initiiert, woraufhin in einem speziellen Präsenzbereich PA der Anzeige DSP eine Präsenz-Liste der Teilnehmer der Kommunikationsgruppe mit ihren jeweiligen Teilnahmezuständen und in dieser Ausführungsform des Aktivitätsstatus von Teilnehmern, welche an mehreren Kommunikationssitzungen gleichzeitig teilnehmen, aufgeführt sind. Wie es in Figur 11 angedeutet ist, sind alle drei Teilnehmer R22, R23 und O "live" an der Kommunikationssitzung dabei, und können Nachrichten beispielsweise des Teilnehmers R21 empfangen und eventuell beantworten. Der Kreis um den Teilnehmer O kennzeichnet, dass dieser nur passiv an der zweiten Kommunikationssitzung teilnimmt, da er gerade eine andere (erste) Kommunikationssitzung als seine aktive Kommunikationssitzung priorisiert hat. Ferner kennzeichnet das Kreuz bzw. die Durchstreichung des Teilnehmers O in der Figur, dass dieser gerade in seiner aktiven Kommunikationssitzung agiert bzw. beschäftigt ist, (wie es beispielsweise gemäß einem in den Figuren 8 und 9 dargestellten Ablauf den übrigen Teilnehmern der zweiten Kommunikationssitzung mitgeteilt wurde). Anstelle des Kreuzes kann zur Kenzeichnung eines "aktiven" oder "beschäftigten" Aktivitätsstatus das Symbol des Teilnehmers 0 auch in einen blinkenden Zustand versetzt werden. Würde der Teilnehmer 0 in seiner aktiven Kommunikationssitzung sein Agieren beenden, so würde das Kreuz durch sein Symbol verschwinden.

## Patentansprüche

1. Verfahren zum Verwalten von Kommunikationssitzungen (KSI1 ; KSI2) in einem paketorientierten Kommunikationssystem (KS), bestehend aus einer zentralen Steuereinrichtung (PTT-S) und einer Mehrzahl von Mobilstationen (0, R11, R12, R21, R22, R23), welche über die zentrale Steuereinrichtung miteinander verbindbar sind, wobei das Verfahren folgende Schritte aufweist:
- Aufbauen einer ersten Kommunikationssitzung (KSI1) zwischen Mobilstationen (O, R11, R12), welche einer ersten Kommunikationsgruppe (KG1) zugeordnet sind, über die zentrale Steuereinrichtung;
- Festlegen einer Sitzungspriorisierung für eine erste Mobilstation (0) der ersten Kommunikationsgruppe, welche ferner zumindest einer zweiten Kommunikationsgruppe (KG2) zugeordnet ist, wobei die Sitzungspriorisierung angibt, an welcher Kommunikationssitzung mit einer der zugeordneten Kommunikationsgruppen die erste Mobilstation in einem aktiven Teilnahmezustand und an welcher Kommunikationssitzung der übrigen der zugeordneten Kommunikationsgruppen die erste Mobilstation in einem passiven Teilnahmezustand teilnehmen möchte;
- Übertragen der Sitzungspriorisierung an die zentrale Steuereinrichtung;
- Aufbauen einer zweiten Kommunikationssitzung (KSI2) zwischen Mobilstationen (R22, R21, R23, O) einschließlich der ersten Mobilstation (O), welche der zumindest einen zweiten Kommunikationsgruppe (KG2) zugeordnet sind, über die zentrale Steuereinrichtung;
- Verwalten der ersten Mobilstation (O) durch die zentrale Steuereinrichtung in den beiden Kommunikationssitzungen entsprechend der übertragenen Sitzungspriorisierung.

2. Verfahren nach Anspruch 1,
bei dem in dem aktiven Teilnahmezustand einer Kommunikationssitzung Datenpakete mit Sprachinformationen zu oder von der ersten Mobilstation übertragen werden.

3. Verfahren nach Anspruch 1 oder 2,
bei dem in dem aktiven Teilnahmezustand die Sprachinformationen von der jeweiligen Mobilstation akustisch ausgegeben und/oder erfasst werden.

4. Verfahren nach einem der Ansprüche 1 bis 3,
bei dem in dem passiven Teilnahmezustand Datenpakete mit Textinformationen zu der ersten Mobilstation übertragen werden.

5. Verfahren nach Anspruch 4,
bei dem die Textinformationen auf einer Anzeige (DSP) der ersten Mobilstation ausgegeben werden.

6. Verfahren nach Anspruch 3 und 5,
bei dem die Ausgabe der Sprachinformationen und der Textinformationen gleichzeitig erfolgt.

7. Verfahren nach einem der Ansprüche 1 bis 6,
bei dem den übrigen Mobilstationen der ersten Kommunikationsgruppe (KG1) und/oder der zumindest einen zweiten Kommunikationsgruppe (KG2) der jeweilige Teilnahmezustand der ersten Mobilstation (O) in den Kommunikationsgruppen durch die zentrale Steuereinrichtung (PTT-S) mitgeteilt wird.

8. Verfahren nach einem der Ansprüche 1 bis 7,
bei dem den übrigen Mobilstationen der jeweiligen Kommunikationsgruppen durch die zentrale Steuereinrichtung mitgeteilt wird, an welcher Kommunikationssitzung mit welchen Kommunikationsgruppen die erste Mobilstation (O) momentan teilnimmt.

9. Verfahren nach einem der Ansprüche 1 bis 8,
bei dem Datenpakete mit Sprachinformationen von einer Kommunikationssitzung (KSI2), an welcher die erste Mobilstation (O) im passiven Teilnahmezustand teilnimmt, durch die zentrale Steuereinrichtung (PTT-S) in Datenpakete mit Textinformationen umgewandelt und zur ersten Mobilstation (O) gesendet werden.

10. Verfahren nach einem der Ansprüche 1 bis 9,
bei dem Datenpakete, welche von der zentralen Steuereinrichtung an die erste Mobilstation (O) übertragen werden, dahingehend **gekennzeichnet** werden, ob sie von einer Kommunikationssitzung stammen, an welcher die erste Mobilstation aktiv oder passiv teilnimmt.

11. Verfahren nach Anspruch 12,
bei dem die erste Mobilstation (O) die Kennzeichnung der Datenpakete analysiert und für die jeweiligen darin enthaltenen Informationen entsprechend eine Sprachausgabe oder Textausgabe durchführt.

12. Verfahren nach einem der Ansprüche 1 bis 11,
bei dem in einer Kommunikationssitzung einer Kommunikationsgruppe immer nur eine Mobilstation zu einer bestimmten Zeit als Sender das Recht zum Übertragen von Datenpaketen mit Sprachinformationen hat, während die anderen Mobilstationen der Kommunikationsgruppe als Empfänger nicht unterbrechen dürfen.

13. Verfahren nach einem der Ansprüche 1 bis 11,
bei dem nach Übertragen von Datenpaketen mit Sprachinformationen von einer sendenden Mobilstation in einer Kommunikationssitzung einer Kommunikationsgruppe an die zentrale Steuereinrichtung (PTT-S) die übrigen Mobilstationen von der zentralen Steuereinrichtung informiert werden, dass Datenpakete zum Übertragen bereitstehen, woraufhin diejenigen Mobilstationen, die die Datenpakete von der zentralen Steuereinrichtung empfangen möchten, dies mitteilen, so dass die zentrale Steuereinrichtung diesen Mobilstationen die Datenpakete überträgt.

14. Verfahren nach einem der Ansprüche 1 bis 13, bei dem den Mobilstationen (R21, R22, R23) einer Kommunikationssitzung (KSI2), an der die erste Mobilstation (O) in einem passiven Teilnahmezustand teilnimmt, ein Aktivitätsstatus der ersten Mobilstation (O) in der Kommunikationssitzung (KSI1) übermittelt wird, an der die erste Mobilstation (O) in einem aktiven Teilnahmezustand teilnimmt.

15. Verfahren nach Anspruch 14, bei dem der Aktivitätsstatus angibt, ob die erste Mobilstation (O) in der Kommunikationssitzung mit aktivem Teilnahmezustand gerade ein Sprachrecht hat oder nicht.

16. Verfahren nach einem der Ansprüche 14 oder 15, bei dem den Mobilstationen (R21, R22, R23) einer Kommunikationssitzung (KSI2), an der die erste Mobilstation (O) in einem passiven Teilnahmezustand teilnimmt, der Aktivitätsstatus der ersten Mobilstation (0) auf einer Anzeige der jeweiligen Mobilstationen angezeigt wird.

17. Kommunikationssystem bestehend aus einer zentralen Steuereinrichtung und einer Mehrzahl von Mobilstationen mit Mitteln zum Durchführen eines Verfahrens gemäß einem der Ansprüche 1 bis 16.

18. Kommunikationssystem nach Anspruch 17,
das als ein Mobilfunksystem ausgebildet ist, welches insbesondere nach dem UMTS-Standard oder GPRS-Standard arbeitet.

19. Kommunikationssystem nach Anspruch 17 oder 18,
bei dem die Mobilstationen als Mobilfunkgeräte, Mobiltelefone oder tragbare Computer mit Funkmodul ausgebildet sind.

20. Zentrale Steuereinrichtung in einem Kommunikationssystem mit Mitteln zum Durchführen eines Verfahrens nach einem der Ansprüche 1 bis 16.

## Claims

1. Method for administration of communication sessions (KSI1 ; KSI2) in a packet-oriented communication system (KS), consisting of a central control device (PTT-S) and a plurality of mobile stations (O, R11, R12, R21, R22, R23), which are connected to each other via the central control device, whereby the method features the following steps:
- Setting up a first communication session (KSI1) between mobile stations (O, R11, R12), which are assigned to a first communication group (KG1), via the central control device;
- Defining a session prioritization for a first mobile station (O) of the first communication group which is further assigned to at least one second communication group (KG2) ; in which the session prioritization specifies the communication session with one of the assigned communication groups the first mobile station wishes to participate in an active participation state and the communication session the other participants of the assigned communication group in which the first mobile station wishes to participate in a passive participation state
- Transmitting the session prioritization to the central control device;
- Setting up a second communication session (KSI2) between mobile stations (R22, R21, R23, O) including the first mobile station (O) which are assigned to the at least one second communication group (KG2), via the central control device;
- Administering the first mobile station (O) through the central control device in the two communication sessions in accordance with the transmitted session prioritization.

2. Method in accordance with claim 1,
in which, in the active participation state of a communication session, data packets with speech information are transmitted to or from the first mobile station.

3. Method according to claim 1 or 2,
in which, in the active participation state the speech information is acoustically output and/or captured by the relevant mobile station.

4. Method in accordance with one of the claims 1 to 3,
in which, in the passive participation state, data packets with text information are transmitted to the first mobile station.

5. Method in accordance with claim 4,
in which the text information is output on a display (DSP) of the first mobile station.

6. Method in accordance with claim 3 and 5,
in which the speech information and the text information are output simultaneously.

7. Method in accordance with one of the claims 1 to 6,
in which the other mobile stations of the first communication group (KG1) and/or of the at least one second communication group (KG2) are informed of the relevant participation state of the first mobile station (O) in the communication group by the central control device (PTT-S).

8. Method in accordance with one of the claims 1 to 7,
in which the other mobile stations of the relevant communication group are informed by the central control device as to the communication session with the communication group
in which the first mobile station (O) is participating at the moment.

9. Method in accordance with one of the claims 1 to 8, in which data packets with speech information from a communication session (KSI2) in which the first mobile station (O) is participating in the passive participation state are converted by the central control device (PTT-S) into data packets with text information and sent to the first mobile station (O).

10. Method in accordance with one of the claims 1 to 9,
in which data packets which are transmitted from the central control device to the first mobile station (O), are identified as to whether they originate from a communication session in which the first mobile station is actively or passively participating.

11. Method in accordance with claim 12,
in which the first mobile station (O) analyzes the identification of the data packets and for the information contained in them in each case, performs a speech output or text output.

12. Method in accordance with one of the claims 1 to 11,
in which in a communication session of a communication group only one mobile station ever has the right at a specific time as sender to transmit data packets with speech information, whereas the other mobile stations of the communication group as recipients may not interrupt.

13. Method in accordance with one of the claims 1 to 11,
in which, after transmission of data packets with speech information from a sending mobile station in a communication session of a communication group to the central control device (PTT-S), the other mobile stations are informed by the central control device that data packets are ready for transmission, whereupon those mobile stations which would like to receive the data packets from the central control device notify the latter so that the central control device transmits the data packets to these mobile stations.

14. Method in accordance with one of the claims 1 to 13, in which the mobile stations (R21, R22, R23) of a communication session (KSI2) in which the first mobile station (O) is participating in a passive participation state, are sent an activity status of the first mobile station (O) in the communication session (KSI1) in which the first mobile station (O) is participating in an active participation state.

15. Method according to claim 14, in which the activity status specifies whether the first mobile station (O) in the communication session with active participation state currently has the right to speak or not.

16. Method in accordance with one of the claims 14 or 15, in which the mobile stations (R21, R22, R23) of a communication session (KSI2) in which the first mobile station (O) is participating in a passive participation state are shown the activity status of the first mobile station (O) on a display of the relevant mobile stations.

17. Communication system consisting of a central control device and a plurality of mobile stations to execute a method in accordance with claims 1 to 16.

18. Communication system in accordance with claim 17,
which is embodied as a mobile radio system, which especially operates according to the UMTS standard or GPRS standard.

19. Communication system in accordance with claim 17 or 18,
in which the mobile stations are embodied as mobile radio devices, mobile telephones or portable computers with radio modules.

20. Central control device in a communication system which is designed to execute a method in accordance with one of the claims 1 to 16.

## Revendications

1. Procédé pour gérer des sessions de communication (KSI1; KSI2) dans un système de communication orienté paquets (KS), composé d'un dispositif de commande central (PTT-S) et d'une pluralité de stations mobiles (O, R11, R12, R21, R22, R23) qui peuvent être interconnectées via le dispositif de commande central, le procédé comportant les étapes suivantes:
- établir, via le dispositif de commande central, une première session de communication (KSI1) entre des stations mobiles (O, R11, R12) qui sont affectées à un premier groupe de communication (KG1);
- déterminer une priorisation de session pour une première station mobile (O) du premier groupe de communication, laquelle est en outre affectée à au moins un deuxième groupe de communication (KG2), la priorisation de session indiquant à quelle session de communication avec l'un des groupes de communication y affectés la première station mobile souhaite participer dans un état de participation actif et à quelle session de communication des autres groupes de communication y affectés la première station mobile souhaite participer dans un état de participation passif;
- transmettre la priorisation de session au dispositif de commande central;
- établir, via le dispositif de commande central, une deuxième session de communication (KSI2) entre des stations mobiles (R22, R21, R23, O), y compris la première station mobile (O), lesquelles sont affectées à l'au moins un deuxième groupe de communication (KG2);
- gérer la première station mobile (O) par le dispositif de commande central dans les deux sessions de communication selon la priorisation de session transmise.

2. Procédé selon la revendication 1, dans lequel des paquets de données avec des informations vocales sont transmis, dans l'état de participation actif d'une session de communication, à ou au départ de la première station mobile.

3. Procédé selon la revendication 1 ou 2, dans lequel les informations vocales, à l'état de participation actif, sont sorties et/ou saisies acoustiquement par la station mobile respective.

4. Procédé selon l'une des revendications 1 à 3, dans lequel des paquets de données avec des informations textuelles, à l'état de participation passif, sont transmis à la première station mobile.

5. Procédé selon la revendication 4, dans lequel les informations textuelles sont sorties sur un affichage (DSP) de la première station mobile.

6. Procédé selon la revendication 3 et 5, dans lequel la sortie des informations vocales et des informations textuelles se produit simultanément.

7. Procédé selon l'une des revendications 1 à 6, dans lequel l'état de participation respectif de la première station mobile (O) dans les groupes de communication est communiqué par le dispositif de commande central (PTT-S) aux autres stations mobiles du premier groupe de communication (KG1) et/ou à l'au moins un deuxième groupe de communication (KG2).

8. Procédé selon l'une des revendications 1 à 7, dans lequel il est communiqué aux autres stations mobiles des groupes de communication respectifs, par le dispositif de commande central, à quelle session de communication la première station mobile (O) participe présentement avec quels groupes de communication.

9. Procédé selon l'une des revendications 1 à 8, dans lequel des paquets de données avec des informations vocales d'une session de communication (KSI2) à laquelle la première station mobile (O) participe à l'état de participation passif sont convertis par le dispositif de commande central (PTT-S) en paquets de données avec des informations textuelles et envoyés à la première station mobile (O).

10. Procédé selon l'une des revendications 1 à 9, dans lequel des paquets de données qui sont transmis par le dispositif de commande central à la première station mobile (O) sont marqués pour indiquer s'ils proviennent d'une session de communication à laquelle la première station mobile participe activement ou passivement.

11. Procédé selon la revendication 12, dans lequel la première station mobile (O) analyse le marquage des paquets de données et opère une sortie vocale ou une sortie textuelle en conséquence pour les informations respectives y contenues.

12. Procédé selon l'une des revendications 1 à 11, dans lequel, à un instant donné, à chaque fois qu'une seule station mobile n'a le droit de transmettre des paquets de données avec des informations vocales, en tant qu'émetteur, dans une session de communication d'un groupe de communication, tandis que les autres stations mobiles du groupe de communication, en tant que récepteurs, ne peuvent pas interrompre.

13. Procédé selon l'une des revendications 1 à 11, dans lequel, après la transmission de paquets de données avec des informations vocales d'une station mobile émettrice dans une session de communication d'un groupe de communication vers le dispositif de commande central (PTT-S), les autres stations mobiles sont informées par le dispositif de commande central du fait que des paquets de données sont prêts à être transmis, suite à quoi les stations mobiles qui souhaitent recevoir les paquets de données du dispositif de commande central communiquent ceci de sorte que le dispositif de commande central transmette les paquets de données à ces stations mobiles.

14. Procédé selon l'une des revendications 1 à 13, dans lequel un statut des activités de la première station mobile (O) dans la session de communication (KSI1) à laquelle la première station mobile (O) participe dans un état de participation actif est transmis aux stations mobiles (R21, R22, R23) d'une session de communication (KSI2) à laquelle la première station mobile (O) participe dans un état de participation passif.

15. Procédé selon la revendication 14, dans lequel le statut des activités indique si la première station mobile (O), dans la session de communication, avec un état de participation actif, a justement un droit de parole ou non.

16. Procédé selon l'une des revendications 14 ou 15, dans lequel le statut des activités de la première station mobile (O) est affiché sur un affichage des stations mobiles respectives pour les stations mobiles (R21, R22, R23) d'une session de communication (KSI2) à laquelle la première station mobile (O) participe dans un état de participation passif.

17. Système de communication composé d'un dispositif de commande central et d'une pluralité de stations mobiles avec des moyens pour la mise en oeuvre d'un procédé selon l'une des revendications 1 à 16.

18. Système de communication selon la revendication 17, lequel se présente sous la forme d'un système radio mobile qui fonctionne en particulier selon le standard UMTS ou le standard GPRS.

19. Système de communication selon la revendication 17 ou 18, dans lequel les stations mobiles se présentent sous la forme d'appareils radio mobiles, de téléphones mobiles ou d'ordinateurs portables avec un module radio.

20. Dispositif de commande central dans un système de communication, avec des moyens pour la mise en oeuvre d'un procédé selon l'une des revendications 1 à 16.
